# EUROPEAN PATENT APPLICATION

(11) **EP 4 068 702 A1**
(43) Date of publication of application: **05.10.2022**
(21) Application number: 20911127.7
(22) Date of filing: 21.09.2020
(51) Int. Cl.: H04L 12/721

(54) **ACTIVE FLOW DETECTION METHOD, NETWORK DEVICE, AND COMMUNICATION SYSTEM**

(30) Priority: 03.01.2020 CN 202010006017; 24.02.2020 CN 202010112503
(71) Applicant: Huawei Technologies Co., Ltd., Shenzhen, Guangdong 518129, (CN)
(72) Inventor: HUANG, Jinming, Shenzhen, Guangdong 518129 (CN); HU, Yongjian, Shenzhen, Guangdong 518129 (CN); ZHANG, Wenfeng, Shenzhen, Guangdong 518129 (CN)
(74) Representative: Pfenning, Meinig & Partner mbB
(86) International application number: PCT/CN2020/116483
(87) International publication number: WO 2021/135414

(57) **Abstract**

This application claims to protect an active in-situ flow metrics method, a network device, and a system. The method includes: In a detection domain to which in-situ flow metrics are applied, if a head node does not receive real service traffic sent by user equipment, the head node actively generates a detection packet including in-situ flow metrics information and an analog service packet. The in-situ flow metrics information is used by a node in the detection domain to perform traffic detection, and indication information included in the analog service packet is used to instruct an end node in the detection domain not to forward the detection packet to another node. After receiving the detection packet sent by the head node, the end node detects network performance based on the in-situ flow metrics information carried in the detection packet, terminates the detection packet, and does not continue to forward the detection packet. In the method in this application, an in-situ flow metrics protocol is extended to add an active in-situ flow metrics capability, so that in-situ flow metrics are implemented even when there is no real service traffic, thereby covering various scenarios of network performance detection.

## Description

This application claims priority to Chinese Patent Application No. 202010112503.3, filed with the China National Intellectual Property Administration on February 24, 2020 and entitled "ACTIVE IN-SITU FLOW METRICS METHOD, NETWORK DEVICE, AND COMMUNICATIONS SYSTEM", and Chinese Patent Application No. 202010006017.3, filed with the China National Intellectual Property Administration on January 3, 2020 and entitled "IN-SITU FLOW METRICS METHOD AND DEVICE", which are incorporated herein by reference in their entireties.

### TECHNICAL FIELD

This application relates to the field of communications technologies, and in particular, to an active in-situ flow metrics method, a network device, and a communications system.

### BACKGROUND

Network performance detection technologies are a research hotspot in the telecommunications field. The network performance detection technologies analyze, control, and adjust a network running status by monitoring, measuring, and collecting network performance data, to provide stable network services. This is the basis of network running. The network performance detection technologies may include active metrics (English: Active Metrics) and passive metrics (English: Passive Metrics) based on measurement methods.

Active metrics are to actively send a detection flow to a network and analyze a network behavior based on a characteristic change that occurs when the detection flow is affected by the network. A measured network performance indicator usually includes one or more of a packet loss rate, a delay, jitter, and bandwidth. Common active measurement protocols include PING, Traceroute, an Internet protocol measurement protocol (English: Internet Protocol Measurement Protocol, IPMP for short), a two-way active measurement protocol (English: Two-Way Active Measurement Protocol, OWAMP for short), and the like. Active metrics are flexible. However, conventional active metrics indirectly simulate a real service by sending an analog detection packet out of band. However, in this detection manner, real service traffic is not measured, consistency of the analog packet and a real service path cannot be ensured, network service quality cannot be completely and truly reflected, and accuracy of the active metrics is deviated from a real network.

Passive metrics are detection technologies that use an in-situ flow metrics technology to directly measure a real service flow sent by user equipment. The in-situ flow metrics technology may be, for example, a detection technology such as in-situ operations administration and maintenance (English: in-situ Operations Administration and Maintenance, IOAM for short), in-situ flow information telemetry (English: In-situ Flow Information Telemetry, IFIT for short), or in-band network telemetry (In-band Network Telemetry, INT for short). In passive metrics, measurement is performed based on a real service flow, and therefore detection accuracy is relatively high. However, passive metrics need be performed based on real service traffic sent by the user equipment. In some network scenarios lacking real service traffic, a current passive metrics technology cannot detect network performance. Therefore, how to provide a new detection mechanism that can cover various scenarios of network performance detection becomes a technical problem that currently needs to be resolved.

### SUMMARY

On this basis, embodiments of this application provide an active in-situ flow metrics method, a network device, and a communications system, and provide a new detection mechanism, in other words, configure an extended in-situ flow metrics protocol, so that in a network scenario in which there is no real service traffic, effective in-situ flow measurement can also be performed on network performance based on an in-situ flow metrics technology, thereby implementing network performance detection in various scenarios.

According to a first aspect, an active in-situ flow metrics method is provided. When a head node (namely, a first network node) in a detection domain to which in-situ flow metrics are applied does not receive a real service packet, the method may include: The first network node generates a first analog service packet. The first analog service packet is not a real service packet sent by user equipment. The first network node generates a first detection packet. The first detection packet includes a first packet header and the first analog service packet, a first forwarding path that is of the first detection packet in the detection domain and that is determined based on the first analog service packet is used to simulate a forwarding path, in the detection domain, of a first real service packet sent by the user equipment, the first packet header includes first in-situ flow metrics information, the first in-situ flow metrics information is used by a node in the first forwarding path to perform in-situ flow metrics on network performance, the first in-situ flow metrics information includes first indication information, and the first indication information is used to instruct an end node in the detection domain not to forward the first detection packet to another node. The first network node sends the first detection packet to the end node in the detection domain along the first forwarding path.

It can be learned that in this embodiment of this application, a current in-situ flow metrics protocol is extended, so that even in a network scenario in which there is no real service traffic, the head node in the detection domain can autonomously generate a detection packet used for in-situ flow metrics, making it possible to perform in-situ flow measurement on network performance based on an in-situ flow metrics technology. Therefore, the method provided in this embodiment of this application is equivalent to providing a new in-situ flow metrics mechanism, and only one extended in-situ flow metrics protocol needs to be configured to complete both active in-situ flow metrics and passive in-situ flow metrics, so that various scenarios of network performance detection can be covered, thereby facilitating network performance detection. In addition, in this embodiment, when an active in-situ flow metrics technology is used, a detection packet generated by the head node further needs to carry indication information to notify the end node that the end node receives a detection packet exclusively used for network performance measurement and indicate the end node not to forward the detection packet to another node. In this way, the detection packet that is not a real service packet and that is exclusively used for measurement is terminated by the end node, and is not forwarded by the end node to a node outside the detection domain, so that a real service provided for a user is prevented from being affected, thereby making the network performance detection mechanism more intelligent.

For example, the first packet header may include a first in-situ flow metrics header, and the first in-situ flow metrics header includes the first indication information. The first indication information is information indicated by at least one bit included in the first in-situ flow metrics header. For example, for IFIT in-situ flow metrics, the first in-situ flow metrics header may be a flow instruction header FIH field, and the first indication information may be a value of a flag bit R in the FIH. For example, when the value of the flag bit R is 0, it may indicate that the first detection packet is passive in-situ flow metrics. On the contrary, when the value of the flag bit R is 1, it may indicate that the first detection packet is active in-situ flow metrics.

For another example, the first packet header may include a first extended in-situ flow metrics header, the first extended in-situ flow metrics header is used to carry the first indication information, and a type field of the first extended in-situ flow metrics header indicates that the in-situ flow metrics are active in-situ flow metrics. IFIT in-situ flow metrics are still used as an example. The first extended in-situ flow metrics header may be specifically an FIEH. In this case, the first indication information may be, for example, a value of a type field of the FIEH, and the value of the type field of the FIEH is used to indicate that the in-situ flow metrics are active in-situ flow metrics or passive in-situ flow metrics. Alternatively, the first indication information may be a value of any preset field or flag bit that may be used as an indication in the FIEH.

For still another example, the first packet header may include an option OPTION field, and the OPTION field includes the first indication information. For example, the first indication information is information indicated by at least one bit included in the OPTION field. For another example, the first indication information is information indicated by a type field of the OPTION field, and the type field indicates that the in-situ flow metrics are active in-situ flow metrics. IFIT in-situ flow metrics are still used as an example. The first indication information may be specifically information indicated by a type Type field of an extended OPTION field, or the first indication information 1 may be values of one or more bits of a reserved Reserved field or another field of an extended OPTION field. IOAM in-situ flow metrics are used as an example. The first indication information may be specifically information indicated by an IOAM Type field of the extended OPTION field, or the first indication information may be values of one or more bits of IOAM data Data. The first packet header may be encapsulated in an IPv6 packet header, a VXLAN packet header, an IPv4 packet header, or an SRH.

The three examples are merely example descriptions of adding the first indication information to the first detection packet in this embodiment of this application. The foregoing three possible implementations are included but do not constitute a limitation. Any other information that can be used to indicate that the in-situ flow metrics are active in-situ flow metrics may be used as the first indication information in this embodiment of this application, and any packet header that can carry the first indication information may be used as the first packet header in this embodiment of this application.

It should be noted that the in-situ flow metrics may be IFIT in-situ flow metrics, IOAM in-situ flow metrics, or INT in-situ flow metrics. Any in-situ flow metrics protocol may be extended by using the method provided in this embodiment of this application to support the active in-situ flow metrics method provided in this embodiment of this application.

The in-situ flow metrics provided in this embodiment of this application may be edge-to-edge E2E active in-situ flow metrics, or may be hop-by-hop active in-situ flow metrics. Details may be flexibly set based on an in-situ flow metrics requirement. In E2E active in-situ flow metrics, each node in the first forwarding path in the detection domain sends a measurement result of the node to a control management device after performing network performance detection. In hop-by-hop in-situ flow metrics, after performing network performance detection, a node other than the end node in the first forwarding path in the detection domain adds a measurement result of the node to a detection packet and sends the measurement result to a next-hop node, until the end node obtains a measurement result of the end node and sends the measurement result of the end node and a measurement result of each node in the first forwarding path in the detection domain to the control management device after performing network performance detection. The control management device performs analysis and manages traffic of the detection domain.

In a possible implementation, a specific process in which the first network node generates the first detection packet may include: The first network node generates the first analog service packet. The first network node encapsulates the first in-situ flow metrics information in the first analog service packet.

For example, the first analog service packet may be a layer-2 packet, the layer-2 packet includes a virtual local area network VLAN identifier, and the VLAN identifier is used to identify a VLAN to which the user equipment belongs. This embodiment of this application may further include: The first network node receives the first real service packet. The first real service packet carries a same VLAN identifier as the first analog service packet. The first network node forwards the first real service packet to the end node along the first forwarding path. For a private-line service, considering that a layer-2 packet is forwarded under guidance of a VLAN to which the layer-2 packet belongs, the layer-2 analog service packet generated by the head node carries a VLAN identifier carried in the real service packet, and simulates the layer-2 real service packet to enter an ingress port on the head node, so that the analog service packet is transmitted in the detection domain along a same forwarding path as the real service packet, and therefore a measurement result of network performance measurement is of real reference significance to forwarding of the real service packet in the detection domain. For a dedicated-network service, considering that a layer-2 packet is forwarded under guidance of a VLAN to which the layer-2 packet belongs and a destination MAC address of the layer-2 packet, the layer-2 analog service packet generated by the head node carries a VLAN identifier and a destination MAC address that are carried in the real service packet, and simulates the layer-2 real service packet to enter an ingress port on the head node, so that the analog service packet is transmitted in the detection domain along a same forwarding path as the real service packet, and therefore a measurement result of network performance measurement is of real reference significance to forwarding of the real service packet in the detection domain.

For another example, the first analog service packet may be a layer-3 packet, the layer-3 packet includes a source Internet protocol IP address and a destination IP address, the source IP address is an IP address that belongs to a same network segment as an IP address of an ingress interface used by the first network node to receive the first real service packet, and the destination IP address is an IP address that belongs to a same network segment as an IP address of an egress interface used by the end node to forward the first real service packet to a user side. This embodiment of this application may further include: The first network node receives the first real service packet by using the ingress interface. The first network node forwards the first real service packet to the end node along the first forwarding path. Considering that a layer-3 packet is forwarded under guidance of a source IP address and a destination IP address, and forwarding paths of packets with source IP addresses in a same network segment and destination IP addresses in a same network segment are consistent, because network segments to which the source IP address and the destination IP address that are carried in the layer-3 analog service packet generated by the head node belong are correspondingly the same as network segments to which a source IP address and a destination IP address that are carried in the real service packet belong, the analog service packet is transmitted in the detection domain along a same forwarding path as the real service packet, so that a measurement result of network performance measurement is of real reference significance to forwarding of the real service packet in the detection domain.

In other specific implementations, this embodiment of this application further includes: The first network node generates a second detection packet. The first detection packet and the second detection packet are different in at least one of a protocol number, a transmission control protocol TCP port number, and a user datagram protocol UDP port number. The second detection packet includes a second packet header and a second analog service packet generated by the first network node, a second forwarding path that is of the second detection packet in the detection domain and that is determined based on the second analog service packet is used to simulate a forwarding path, in the detection domain, of a second real service packet sent by the user equipment, the second packet header includes second in-situ flow metrics information, the second in-situ flow metrics information is used by a node in the second forwarding path to perform in-situ flow metrics on network performance, the second in-situ flow metrics information includes second indication information, and the second indication information is used to indicate the end node not to forward the second detection packet to another node. The first network node forwards the second detection packet to the end node along the second forwarding path.

In this implementation, this embodiment of this application may further include: The first network node receives the second real service packet sent by the user equipment. The second real service packet and the second detection packet carry a same protocol number and a same TCP port number or UDP port number. The first network node forwards the second real service packet to the end node along the second forwarding path.

In this way, in this implementation, a plurality of forwarding paths with a same head node and a same end node in the detection domain can be detected to provide data support for normal transmission, in a network, of different real service packets that need to be transmitted along different forwarding paths, so that the network performance detection mechanism can adapt to more network scenarios, thereby implementing more complete network performance measurement in the detection domain.

According to a second aspect, an embodiment of this application further provides a method for actively detecting network performance based on in-situ flow metrics. The method is applied to a detection domain of in-situ flow metrics, and is performed by any node, namely, a second network node, after a head node in the detection domain. For example, the method may include: The second network node in the detection domain receives, by using a first forwarding path in the detection domain, a first detection packet sent by a first network node in the detection domain. The first detection packet includes a first packet header and a first analog service packet, the first packet header includes first in-situ flow metrics information, the first in-situ flow metrics information includes indication information, the indication information is used to instruct an end node in the detection domain not to forward the first detection packet to another node, the first analog service packet is not a real service packet sent by user equipment, and the first forwarding path is used to simulate a forwarding path, in the detection domain, of a first real service packet sent by the user equipment. The second network node performs in-situ flow metrics on network performance based on the first in-situ flow metrics information.

For example, the second network node may be the end node in the detection domain, and after the second network node detects the network performance, the method may further include: The second network node does not forward the first detection packet to another node according to the indication information.

For another example, the second network node may be an intermediate node in the detection domain, and the method may further include: The second network node updates the first detection packet to obtain a second detection packet. The second detection packet includes second in-situ flow metrics information, and the second in-situ flow metrics information includes indication information. The second network node forwards the second detection packet to the end node along the first forwarding path.

In a possible implementation, the first analog service packet may be a layer-2 packet, the layer-2 packet includes a virtual local area network VLAN identifier, and the VLAN identifier is used to identify a VLAN to which the user equipment belongs. In this case, the first network node receives the first real service packet sent by the user equipment. The first real service packet carries a VLAN identifier. The first network node may forward the first real service packet to the end node along the first forwarding path.

In another possible implementation, the first analog service packet is a layer-3 packet, the layer-3 packet includes a source Internet protocol IP address and a destination IP address, the source IP address is an IP address that belongs to a same network segment as an IP address of an ingress interface used by the head node in the detection domain to receive the first real service packet sent by the user equipment, and the destination IP address is an IP address that belongs to a same network segment as an IP address of an egress interface used by the end node to forward the first real service packet to a user side.

It can be learned that in scenarios of both the layer-2 packet and the layer-3 packet, in this embodiment of this application, the analog service packet can be transmitted in the detection domain along a same forwarding path as the real service packet, so that a measurement result of network performance measurement is of real reference significance to forwarding of the real service packet in the detection domain.

The in-situ flow metrics are IFIT in-situ flow metrics, IOAM in-situ flow metrics, or INT in-situ flow metrics.

The in-situ flow metrics are edge-to-edge active in-situ flow metrics or hop-by-hop active in-situ flow metrics.

It should be noted that for a specific implementation and an achieved effect of the method provided in the second aspect of embodiments of this application, refer to related descriptions in the embodiment described in the first aspect, and details are not described herein again.

According to a third aspect, this application further provides a first network device, including a transceiver unit and a processing unit. The transceiver unit is configured to perform a receiving/sending operation in the method provided in the first aspect, and the processing unit is configured to perform an operation other than the receiving/sending operation in the first aspect. For example, when the first network device performs the method according to the first aspect, the transceiver unit is configured to send a first detection packet to an end node in a detection domain along a first forwarding path, and the processing unit is configured to generate the first detection packet.

According to a fourth aspect, an embodiment of this application further provides a second network device. The second network device includes a transceiver unit and a processing unit. The transceiver unit is configured to perform a receiving/sending operation in the method provided in the second aspect, and the processing unit is configured to perform an operation other than the receiving/sending operation in the second aspect. For example, when the second network device performs the method according to the second aspect, the transceiver unit is configured to receive, by using a first forwarding path in a detection domain, a first detection packet sent by a first network node in the detection domain, and the processing unit is configured to perform in-situ flow metrics on network performance based on first in-situ flow metrics information.

According to a fifth aspect, an embodiment of this application further provides a first network device, including a first communications interface, a second communications interface, and a processor. The first communications interface is configured to perform a receiving operation in the method provided in the first aspect, the second communications interface is configured to perform a sending operation in the method provided in the first aspect, and the processor is configured to perform an operation other than the receiving and sending operations in the method provided in the first aspect.

According to a sixth aspect, an embodiment of this application further provides a second network device, including a first communications interface, a second communications interface, and a processor. The first communications interface is configured to perform a receiving operation in the method provided in the second aspect, the second communications interface is configured to perform a sending operation in the method provided in the second aspect, and the processor is configured to perform an operation other than the receiving and sending operations in the method provided in the second aspect.

According to a seventh aspect, an embodiment of this application further provides a first network device. The first network device includes a memory and a processor. The memory includes computer-readable instructions, and the processor communicating with the memory is configured to execute the computer-readable instructions, so that the first network device is configured to perform the method provided in the first aspect.

According to an eighth aspect, an embodiment of this application further provides a second network device. The second network device includes a memory and a processor. The memory includes computer-readable instructions, and the processor communicating with the memory is configured to execute the computer-readable instructions, so that the second network device is configured to perform the method provided in the second aspect.

According to a ninth aspect, an embodiment of this application further provides a computer-readable storage medium. The computer-readable storage medium stores instructions, and when the instructions run on a computer, the computer performs the active in-situ flow metrics method provided in the first aspect or the second aspect.

According to a tenth aspect, an embodiment of this application further provides a computer program product, including a computer program or computer-readable instructions. When the computer program or the computer-readable instructions run on a computer, the computer performs the active in-situ flow metrics method provided in the first aspect or the second aspect.

According to an eleventh aspect, an embodiment of this application further provides a communications system. The communications system includes the first network device provided in the third aspect, the fifth aspect, or the seventh aspect and the second network device provided in the fourth aspect, the sixth aspect, or the eighth aspect.

### BRIEF DESCRIPTION OF DRAWINGS

FIG. 1 is a schematic diagram of a header structure of IFIT information according to an embodiment of this application;
FIG. 2 is a schematic diagram of a network system framework in an application scenario according to an embodiment of this application;
FIG. 3 is a schematic diagram of a network system framework in another application scenario according to an embodiment of this application;
FIG. 4A and FIG. 4B are a schematic flowchart of an active in-situ flow metrics method 100 according to an embodiment of this application;
FIG. 5a is a schematic diagram of a format of an extended OPTION field in a detection packet 1 in a case of IFIT according to an embodiment of this application;
FIG. 5b is a schematic diagram of a format of an extended OPTION field in a detection packet 1 in a case of IOAM according to an embodiment of this application;
FIG. 6A and FIG. 6B are a schematic flowchart of an active in-situ flow metrics method 200 according to an embodiment of this application;
FIG. 7A, FIG. 7B, and FIG. 7C are a schematic diagram of an active in-situ flow metrics method in a scenario according to an embodiment of this application;
FIG. 8 is a schematic flowchart of an active in-situ flow metrics method 400 according to an embodiment of this application;
FIG. 9 is a schematic flowchart of an active in-situ flow metrics method 500 according to an embodiment of this application;
FIG. 10 is a schematic diagram of a structure of a first network device 1000 according to an embodiment of this application;
FIG. 11 is a schematic diagram of a structure of a second network device 1100 according to an embodiment of this application;
FIG. 12 is a schematic diagram of a structure of a first network device 1200 according to an embodiment of this application;
FIG. 13 is a schematic diagram of a structure of a second network device 1300 according to an embodiment of this application;
FIG. 14 is a schematic diagram of a structure of a first network device 1400 according to an embodiment of this application;
FIG. 15 is a schematic diagram of a structure of a second network device 1500 according to an embodiment of this application; and
FIG. 16 is a schematic diagram of a structure of a communications system 1600 according to an embodiment of this application.

### DESCRIPTION OF EMBODIMENTS

The following describes technical solutions of embodiments of this application with reference to the accompanying drawings. A network architecture and a service scenario described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

Ordinal numbers such as "1", "2", "3", "first", "second", and "third" in this application are used to distinguish between a plurality of objects, but are not used to limit a sequence of the plurality of objects.

"A and/or B" mentioned in this application should be understood as including the following cases: Only A is included, only B is included, or both A and B are included.

An IOAM-based in-situ flow metrics technology in this application means that when a data packet is transmitted in a detection domain, OAM information is carried in the data packet. "In-situ" (English: in-situ) means that the OAM information is added to the data packet instead of being carried in a dedicated OAM packet.

For an IFIT-based in-situ flow metrics technology, refer to related descriptions in an Internet engineering task force (English: Internet Engineering Task Force, IETF for short) draft "In-situ Flow Information Telemetry draft-song-opsawg-ifit-framework-10". The draft is incorporated herein by reference in its entirety.

For an INT-based in-situ flow metrics technology in this application, refer to related descriptions in an IETF draft "Data-plane for in-band telemetry collection draft-lapukhov-dataplane-prove-01". The draft is incorporated herein by reference in its entirety.

It should be noted that with development of various in-situ flow metrics technologies, in-situ flow metrics technologies mentioned in this application include various developed in-situ flow metrics technologies.

The following briefly describes some technical terms in this application.

Customer: A customer refers to user equipment in this application. "User equipment" and "customer" may often be used interchangeably. It should be understood that the two have a same meaning.

In-situ flow metrics: In-situ flow metrics, which may also be referred to as in-situ flow measurement, means detecting network performance with a service flow. Network performance detection may include, for example, detecting a service channel carrying a service and network performance of a corresponding network element. The service channel may be a forwarding path of a service flow, and the network performance may include, for example, a transmission delay, a packet loss rate, jitter, and a bit error rate.

Analog service packet: In this application, an analog service packet is generated by a detection node in an in-situ flow metrics domain when there is no real service traffic in a network to simulate a real service packet sent by user equipment. A forwarding path of the analog service packet in the detection domain is consistent with a forwarding path of the real service packet sent by the user equipment. After receiving the analog service packet, an end node in the detection domain does not forward the analog service packet like another node in the network.

Real service packet: A real service packet is real service traffic that is transmitted in a network and that is sent by user equipment. When receiving the real service packet, an end node in a detection domain needs to forward the packet to a destination address of the real service packet.

The following uses an IFIT technology as an example to describe the in-situ flow metrics technology.

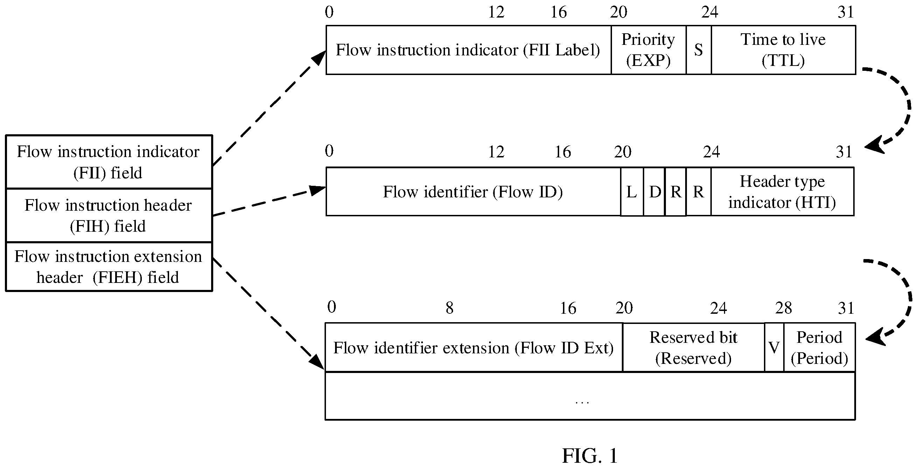

In the IFIT technology, feature marking may be performed, by using IFIT information carried in a packet, on a node through which a service flow in a network passes. The feature marking may also be referred to as coloring. The IFIT information may constitute an IFIT header as a whole, for example, may be used as an extension header of a multi-protocol label switching (English: Multi-Protocol Label Switching, MPLS for short) protocol. Alternatively, the IFIT information may be scattered and included in, for example, an Internet protocol (English: Internet Protocol, IP) header based on field information or the like. Each hop of node through which the service flow passes reports collected data such as a timestamp and a packet count to a network management device, so that the network management device further calculates a network delay, a packet loss status, a restoration path, and the like based on the reported data. In a point-to-point flow transmission service scenario, a possible header structure that is of the IFIT information and that is used in an MPLS protocol network is shown in FIG. 1, and key fields in the IFIT header structure are described herein.
1. Flow instruction indicator (English: Flow Instruction Indicator, FII for short) field: The field is mainly used to indicate that subsequent data information is IFIT information. For example, the following field information may be included:
   a flow instruction indicator label (English: FII Label), where a default value may be configured to identify an IFIT detection flow; and
   a flag bit S, used to indicate whether the flow instruction indicator label is at the bottom of a stack, where for example, a value 1 indicates that the flow instruction indicator label is at the bottom of the stack, and a value 0 indicates that the flow instruction indicator label is not at the bottom of the stack, where
   some related information such as a priority EXP and time to live (English: Time To Live, TTL for short) in an outer MPLS label header may be inherited.
2. Flow instruction header (English: Flow Instruction Header, FIH for short) field, which may also be referred to as an in-situ flow metrics header or a flow detection header. The field is mainly used to carry information related to IFIT detection. For example, the following field information may be included:
   a flow identifier (English: Flow ID), which is a globally unique identifier allocated to each piece of IFIT detection traffic;
   a flag bit L, used for packet loss (English: packet loss) detection coloring marking, where for example, a value "1" of the flag bit L indicates that a packet loss is collected, and "0" indicates that no packet loss is collected;
   a flag bit D, used for delay (English: delay) measurement coloring marking, where for example, a value "1" of the flag bit D indicates that a timestamp is collected, and "0" indicates that no timestamp is collected;
   a header type indicator (English: Header Type Indicator, HTI for short), marking a range of nodes that need to send IFIT detection results and a range of detection content, where for example, different mark values may be used to distinguish whether to detect a path node with an IFIT capability in addition to nodes at two ends and whether a flow instruction extension header (English: Flow Instruction Extension Header, FIEH for short) field is included; and
   a flag bit R, which may be used as a reserved flag bit.
3. Flow instruction extension header FIEH field, which may also be referred to as a flow extension detection header or an extension in-situ flow metrics header: The field serves as an extension field, and is mainly used to carry other information related to IFIT detection. For example, the following field information may be included:
   a flow identifier extension Flow ID Ext, used to extend a flow identifier bit width;
   a flag bit V, used to mark a reverse flow (English: reverse flow), where for example, a value "0" of the flag bit V indicates that a current flow is a forward flow and a receive end may automatically create a reverse flow, and "1" indicates that a current flow is a reverse flow and the receive end does not automatically create a reverse flow; and
   a period (English: Period), where different values indicate different detection periods, and the detection period may be, for example, 1s, 10s, 30s, 1 min, or 10 min.

Generally, after receiving a packet sent by user equipment, a head node in a detection domain encapsulates IFIT information (namely, in-situ flow metrics information) in the packet to indicate a network node in the detection domain to perform IFIT detection. A type of the packet may be, for example, a data packet or a control packet. In an actual application scenario, a plurality of data packets or control packets may be continuously sent, for example, a plurality of data packets may constitute one data stream; or a plurality of data packets or control packets such as operations administration and maintenance (English: Operation, Administration and Maintenance, OAM for short) control packets are sent at intervals in a specific period.

In a network, a network range in which IFIT detection needs to be performed may be determined by specifying a detection domain. Generally, a network node in the detection domain needs to transmit IFIT information to implement IFIT detection, and sends corresponding information obtained after the IFIT detection to a network management device. A detection range of the detection domain may be determined based on a plurality of manners, for example, may be determined based on a network scenario, where for example, a core network part in the network is specified as the detection domain; or may be determined based on a service type, where for example, detection domains of different ranges are specified for a video service and a voice service. An IFIT network includes three types of nodes, which are specifically a head node (English: head node), an end node (English: end node), and hops of path nodes (English: path node). The hops of path nodes may also be referred to as intermediate nodes. The head node, the end node, and the path node may be, for example, corresponding network nodes in the network. For a data stream, the first network node transmitting the data stream within a specified detection range of the detection domain may be used as a head node for transmitting the data stream. The last network node transmitting the data stream within the specified detection range of the detection domain may be used as an end node for transmitting the data stream. Nodes transmitting the data stream between the head node and the end node are hops of path nodes. The IFIT information may be added by the head node and peeled off by the end node.

The detection domain in this application is a network domain to which in-situ flow metrics are applied. Specifically, the detection domain includes a plurality of forwarding devices, for example, a router or a switch, for which an in-situ flow metrics function is enabled. The detection domain may further include a control management device such as a logical centralized controller, configured to: perform in-situ flow metrics configuration on the plurality of forwarding devices in the detection domain, and collect and analyze in-situ flow metrics data reported by the plurality of forwarding devices.

An active in-situ flow metrics technology in this application is described with reference to the in-situ flow metrics technology described above.

Active in-situ flow metrics mean that based on the in-situ flow metrics technology described above, when a head node in a detection domain does not receive real service traffic sent by user equipment, the head node actively generates detection traffic, and encapsulates in-situ flow metrics information in the detection traffic. For example, if IFIT in-situ flow metrics are used as a basis, a detection packet carries IFIT in-situ flow metrics information. The head node sends the detection packet to an end node along a forwarding path of the detection packet, and a node in the forwarding path in the detection domain may measure network performance based on the received detection packet. In this application, active in-situ flow metrics are an extension of conventional passive in-situ flow metrics, so that an in-situ flow metrics protocol supports an active metrics capability, thereby implementing high-precision detection of network performance when there is no real service traffic. In this application, whether the forwarding path meets a service bearer requirement may be determined based on a measurement result of the active in-situ flow metrics. Therefore, a scenario in which there is real service traffic and a scenario lacking real service traffic can be covered based on a same in-situ flow metrics protocol. Equivalent to a technical solution in which an out-of-band measurement protocol is used to measure network performance in a case of no real service traffic and network performance in a case of real traffic is tested based on in-situ flow metrics, the solution provided in this application only requires one measurement protocol, configuration is simple, and the solution is compatible with a plurality of network scenarios.

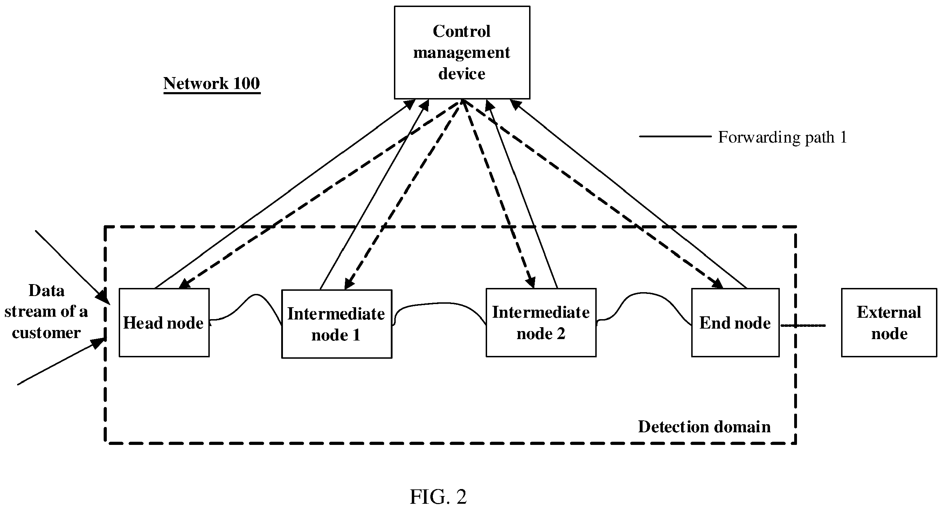

FIG. 2 is a schematic diagram of a network architecture according to an embodiment of this application. A network 100 includes a control management device and a plurality of network nodes. The plurality of network nodes are connected by using a communications link and are configured to transmit a data stream. As shown in FIG. 2, a head node, an intermediate node 1, an intermediate node 2, and an end node in a detection domain are connected by using a communications link. In addition to the nodes shown in the figure, the detection domain may include other nodes not shown. The end node may also be connected to an external node by using a communications link. A data stream sent by user equipment may pass through the head node, the intermediate node 1, the intermediate node 2, and the end node along a forwarding path 1, to reach the external node. The control management device may be, for example, a centralized controller, a network management center, or a traffic analysis device that performs a traffic analysis function. The control management device may be one device, or may be a set of a plurality of devices.

The control management device may be configured to perform information collection and transmission path performance detection on a data packet in a transmission path between the plurality of network nodes. The transmission path performance detection includes but is not limited to detection of a transmission delay, a packet loss rate, and a packet loss location. In this embodiment of this application, the transmission path may include a path through which a data stream passes. In this application, the control management device may determine a detection domain. The detection domain is a detection range determined by the control management device. Alternatively, each forwarding device in a detection domain may perform configuration to obtain the detection domain. In a transmission path in the detection domain, network nodes located between a head node and an end node in the detection domain are intermediate nodes, for example, the intermediate node 1 and the intermediate node 2 in FIG. 2.

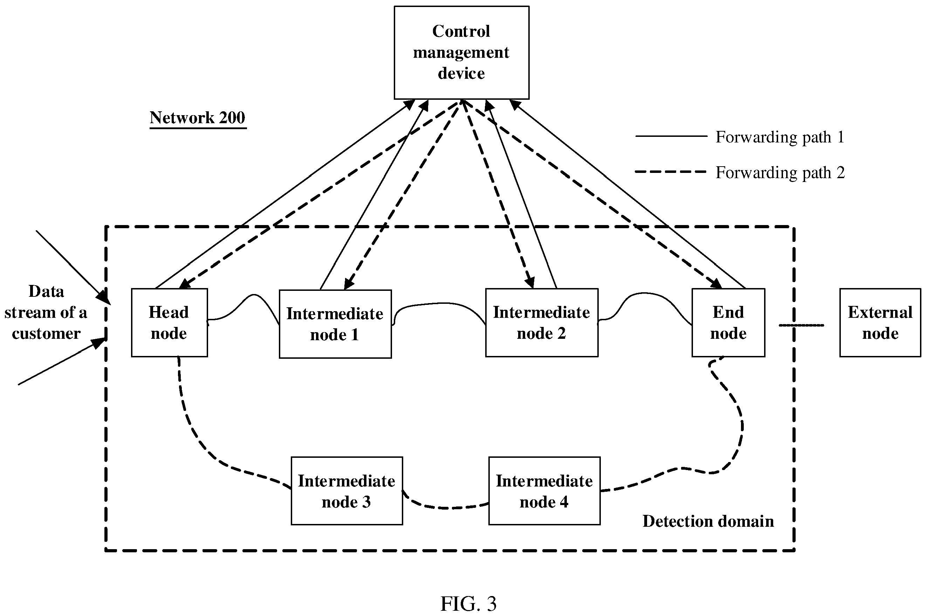

FIG. 3 is a schematic diagram of another network architecture according to this application. A network 200 shown in FIG. 3 mainly differs from the network 100 shown in FIG. 2 in that a plurality of transmission paths exist between a head node and an end node. In a specific implementation, the plurality of transmission paths include at least a forwarding path 1 and a forwarding path 2 shown in FIG. 3. A data stream sent by user equipment may pass through the head node, an intermediate node 1, an intermediate node 2, and the end node along the forwarding path 1, to reach an external node; or may pass through the head node, an intermediate node 3, an intermediate node 4, and the end node in a detection domain along the forwarding path 2, to reach an external node. In a possible implementation, the forwarding path 1 may be a working path, and the forwarding path 2 may be a protection path. When the forwarding path 1 is faulty, the forwarding path 2 carries service traffic. In another possible implementation, the forwarding path 1 and the forwarding path 2 may be equivalent paths. When receiving a service flow sent by the user equipment, the head node selects, through hash calculation, the forwarding path 1 to carry service traffic.

It should be understood that FIG. 2 or FIG. 3 only shows, as examples, four nodes included in the detection domain, and the detection domain may include any other quantity of nodes. This is not limited in embodiments of this application. The network architecture shown in FIG. 2 or FIG. 3 is merely an example for description. An application scenario of in-situ flow metrics provided in this application is not limited to the scenario shown in FIG. 2 or FIG. 3. The technical solution provided in this application is applicable to all network scenarios in which the in-situ flow metrics technology is used to perform data transmission.

In the scenario shown in FIG. 2 or FIG. 3, when the shown node devices in the detection domain are enabled, and configuration of a service channel between the head node and the end node is completed, it is expected to perform performance detection on the service channel to determine whether the service channel meets a service bearer requirement, for example, a requirement on an indicator such as a delay, bandwidth, or a packet loss rate. For another example, in the scenario shown in FIG. 3, when being used as a protection path, the forwarding path 2 usually does not carry real service traffic, and it is expected to measure a performance indicator of the forwarding path 2 to determine whether the protection path meets a service bearer requirement, so that when a working path is faulty, traffic can be switched to a protection path that meets the service bearer requirement. In the foregoing two possible specific network application scenarios, performance detection cannot be completed based on a current in-situ flow metrics technology. However, if an out-of-band traffic measurement method is used together for measurement, protocol configuration is quite complicated.

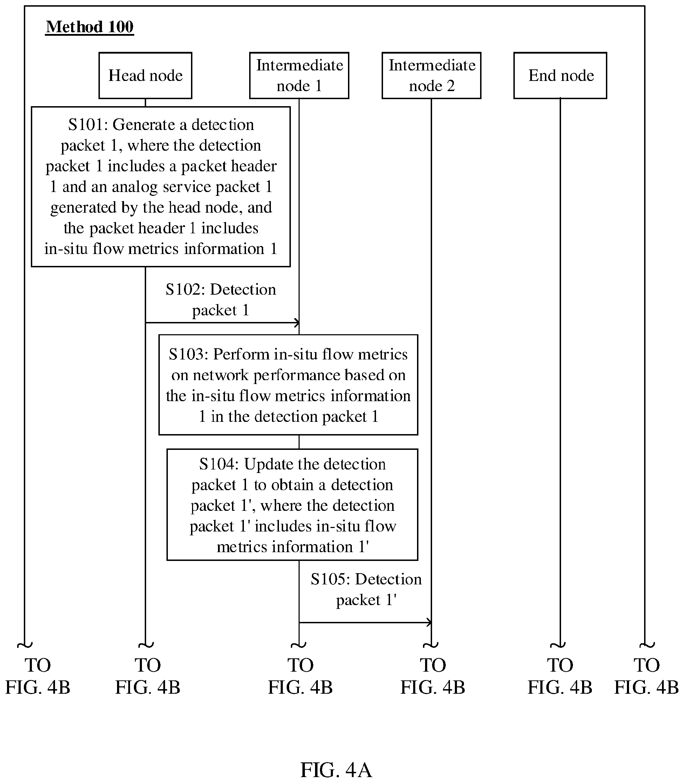

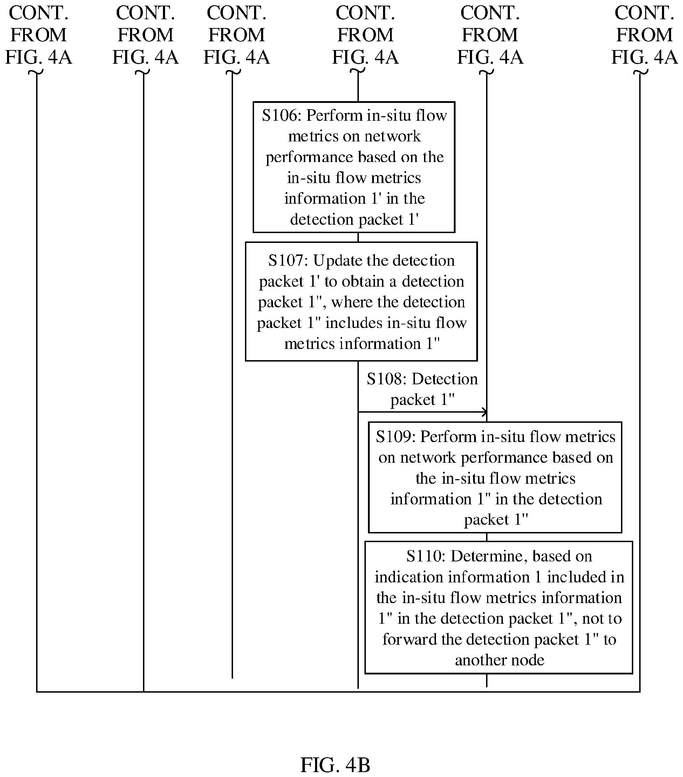

In view of this, to resolve the foregoing problem, this application provides an active in-situ flow metrics method 100. An in-situ flow metrics protocol is extended to support an active metrics capability, so that in a network scenario in which there is no real service traffic, in-situ flow measurement can also be performed on network performance based on an in-situ flow metrics technology. With reference to FIG. 4A and FIG. 4B, the following uses the scenario shown in FIG. 3 as an example to briefly describe the active in-situ flow metrics method 100 in this application.

FIG. 4A and FIG. 4B show an active in-situ flow metrics method 100 according to an embodiment of this application. The method 100 may include, for example, the following S101 to S110.

S101: A head node in a detection domain generates a detection packet 1, where the detection packet 1 includes a packet header 1 and an analog service packet 1 generated by the head node, and the packet header 1 includes in-situ flow metrics information 1.

It should be noted that in a network to which the method 100 in this embodiment of this application is applied, any extended in-situ flow metrics protocol may be configured to support execution of S101 to S110 in the method 100. The in-situ flow metrics protocol may be, for example, any one of an IFIT protocol, an IOAM protocol, and an INT protocol. In this embodiment of this application, in-situ flow metrics performed by the head node, an intermediate node 1, an intermediate node 2, and an end node are consistent with the configured protocol. In other words, the in-situ flow metrics performed are any one of IFIT in-situ flow metrics, IOAM in-situ flow metrics, and INT in-situ flow metrics.

In this embodiment of this application, a function module that can generate a detection packet is provided on the head node in the detection domain, and the function module may be referred to as a packet transmitter. When network performance detection needs to be performed on a forwarding path 1 in the detection domain, but no real packet is currently transmitted in the forwarding path 1 of the network, the head node in the forwarding path 1 in the detection domain may generate the detection packet 1 to implement the active in-situ flow metrics method 100 to perform network performance measurement on nodes and links included in the forwarding path 1.

In a specific implementation, a process in which the head node generates the detection packet 1 may specifically include: S11: The head node generates the analog service packet 1. S12: The head node encapsulates, in the analog service packet 1, the packet header 1 including the in-situ flow metrics information 1, to obtain the detection packet 1.

The generated detection packet 1 varies with a network environment. The packet header 1 is adaptably encapsulated based on a packet type of the detection packet 1. For example, for an Internet protocol version 4 (English: Internet Protocol version 4, IPv4 for short) network environment, the detection packet 1 is an IPv4 packet, and the packet header 1 may be encapsulated in an option OPTION field of the IPv4 packet. For another example, for an Internet protocol version 6 (English: Internet Protocol version 6, IPv6 for short) network environment, the detection packet 1 is an IPv6 packet, and the packet header 1 may be encapsulated in an IPv6 packet header (for example, a hop-by-hop (English: Hop By Hop) header). For still another example, for a segment routing IPv6 (English: Segment Routing IPv6, SRv6 for short) network environment, the detection packet 1 is an SRv6 packet, and the packet header 1 may be encapsulated in an SRv6 extension header (English: Segment Routing Header, SRH for short) of the SRv6 packet. For yet another example, for an MPLS network environment, the packet header 1 may be encapsulated in an MPLS packet header. It should be noted that a person skilled in the art may specifically encapsulate the packet header 1 in this embodiment of this application based on existing common knowledge, to generate a corresponding detection packet 1.

The analog service packet 1 generated in S11 is not a real service packet sent by the user equipment to the head node, but an analog packet that is transmitted in the detection domain along the forwarding path 1 and that is generated by the head node to simulate a real service packet 1 that may be sent by the user equipment along the forwarding path 1. The packet header 1 in S12 is a packet header encapsulated, after the analog service packet 1 is generated, in the analog service packet 1 to generate the detection packet 1. The in-situ flow metrics information 1 in the packet header 1 is used to indicate each node in the forwarding path 1 to perform in-situ flow metrics on network performance. In addition, the in-situ flow metrics information 1 further includes indication information 1, and the indication information 1 is used to indicate the end node in the forwarding path 1 in the detection domain not to forward the detection packet 1 to another node. In this way, the following case can be effectively avoided: The end node uses the detection packet as a real service packet, and sends the packet to a node outside the detection domain, affecting a service provided for a user.

The analog service packet 1 may be a layer-2 packet or a layer-3 packet. Whether the head node specifically generates a layer-2 analog service packet 1 or a layer-3 analog service packet 1 may depend on whether the real service packet 1 is a layer-2 packet or a layer-3 packet. Specifically, if the real service packet 1 transmitted by the head node along the forwarding path 1 is a layer-2 packet, the generated analog service packet 1 may be a layer-2 packet. If the real service packet 1 transmitted by the head node along the forwarding path 1 is a layer-3 packet, the generated analog service packet 1 may be a layer-3 packet.

For example, both the analog service packet 1 and the real service packet 1 are layer-2 packets, and the real service packet 1 carries a virtual local area network (English: Virtual Local Area Network, VLAN for short) identifier. The VLAN identifier is used to identify a VLAN to which the user equipment belongs, and the real service packet 1 may enter the head node from a port 1, in other words, the port 1 is an ingress port used by the head node to receive the real service packet 1. In this case, the analog service packet 1 generated by the head node by simulating the real service packet 1 may include the VLAN identifier, and may further include a port number corresponding to the port 1. The port number is used to indicate the port 1. In this way, it can be ensured that the detection packet 1 generated by the head node based on the analog service packet 1 is also transmitted in the detection domain along the forwarding path 1.

For example, for a private-line service, a forwarding table included in each node includes a correspondence between an ingress port on the node, a VLAN identifier, and an egress port on the node, and a real service packet is forwarded based on a VLAN to which the real service packet belongs. Therefore, for the real service packet 1 carrying a VLAN identifier 1, after receiving the real service packet 1 from the ingress port 11, the head node parses out the VLAN identifier 1 carried in the real service packet 1 to determine an egress port 12 based on the ingress port 11 and the VLAN identifier 1, and forwards the real service packet 1 from the egress port 12 to a next-hop node (namely, the intermediate node 1). Because the forwarding table on each node is unchanged, to simulate the forwarding path 1 of the real service packet 1 in the detection domain, the generated analog service packet 1 needs to carry a same VLAN identifier as the real service packet 1, in other words, the analog service packet 1 needs to carry the VLAN identifier 1. In addition, the head node needs to perform, through simulation, configuration that the analog service packet 1 is received from the ingress port 11 (namely, an ingress port of the real service packet 1). For example, the head node notifies, by using a configuration command, a forwarder responsible for packet forwarding that an ingress port of the analog service packet 1 is the port 11. Alternatively, for another example, the head node adds, to the analog service packet 1, a port number used to identify the ingress port 11, but needs to delete the port number from the analog service packet 1 before forwarding the analog service packet 1 to the next-hop node. In this way, after generating the analog service packet 1 whose reception from the ingress port 11 is simulated, the head node parses out the VLAN identifier 1 carried in the analog service packet 1 to determine the egress port 12 based on the ingress port 11 and the VLAN identifier 1, and forwards the analog service packet 1 from the egress port 12 to the next-hop node (namely, the intermediate node 1). In addition, because forwarding tables on all subsequent nodes are consistent, it is ensured that the analog service packet 1 can be forwarded along the forwarding path 1 of the real service packet in the detection domain.

For another example, for a dedicated-network service, a forwarding table included in each node includes a correspondence between an ingress port on the node, a VLAN identifier, a source media access control (English: Media Access Control Address, MAC for short) address (referred to as a destination MAC address below), and an egress port on the node, and a real service packet is forwarded based on a VLAN to which the real service packet belongs and a destination MAC address of the real service packet. Therefore, for the real service packet 1 carrying a VLAN identifier 1 and a destination MAC address 1, after receiving the real service packet 1 from the ingress port 11, the head node parses out the VLAN identifier 1 and the destination MAC address 1 that are carried in the real service packet 1 to determine an egress port 12 based on the ingress port 11, the VLAN identifier 1, and the destination MAC address 1, and forwards the real service packet 1 from the egress port 12 to a next-hop node (namely, the intermediate node 1). Because the forwarding table on each node is unchanged, to simulate the forwarding path 1 of the real service packet 1 in the detection domain, the generated analog service packet 1 needs to carry a same VLAN identifier and destination MAC address as the real service packet 1, in other words, the analog service packet 1 needs to carry the VLAN identifier 1 and the destination MAC address 1. In addition, the head node needs to perform, through simulation, configuration that the analog service packet 1 is received from the ingress port 11 (namely, an ingress port of the real service packet 1). For example, the head node notifies, by using a configuration command, a forwarder responsible for packet forwarding that an ingress port of the analog service packet 1 is the port 11. Alternatively, for another example, the head node adds, to the analog service packet 1, a port number used to identify the port 11, but needs to delete the port number from the analog service packet 1 before forwarding the analog service packet 1 to the next-hop node. In this way, after generating the analog service packet 1 whose reception from the ingress port 11 is simulated, the head node parses out the VLAN identifier 1 and the destination MAC address 1 that are carried in the analog service packet 1 to determine the egress port 12 based on the ingress port 11, the VLAN identifier 1, and the destination MAC address 1, and forwards the analog service packet 1 from the egress port 12 to the next-hop node (namely, the intermediate node 1). In addition, because forwarding tables on all subsequent nodes are consistent, it is ensured that the analog service packet 1 can be forwarded along the forwarding path 1 of the real service packet in the detection domain.

In addition, the detection packet 1 including the analog service packet 1 may further carry a source MAC address, a destination MAC address, a source Internet protocol (English: Internet Protocol, IP for short) address, and a destination IP address. The source MAC address may be a MAC address of a node other than nodes in the forwarding path 1 or a MAC address of an interface on a node other than nodes in the forwarding path 1. A destination MAC address of a private-line service may be a MAC address of a node other than the nodes in the forwarding path 1 or a MAC address of an interface on a node other than the nodes in the forwarding path 1. A destination MAC address of a dedicated-network service may be a destination MAC address of the real service packet 1. The source IP address and the destination IP address each may be any unicast IP address.

Before the method 100 is performed or after the method 100 is performed, the head node may further receive the real service packet 1 from the ingress port (namely, the port 1). The real service packet 1 carries the VLAN identifier or the real service packet 1 carries the VLAN identifier and a destination MAC address. Therefore, the head node may determine an egress port based on a forwarding table stored on the head node, and it is true for each hop of node, so that it is determined that the forwarding path 1 of the real service packet 1 in the detection domain sequentially includes the head node, the intermediate node 1, the intermediate node 2, and the end node, in other words, the head node forwards the real service packet 1 to the end node along the forwarding path 1. In this way, even if a non-real service packet is used to complete in-situ flow metrics, because a detection packet simulates a forwarding path of a real service packet in the detection domain, the in-situ flow metrics method can completely and truly measure network performance of a forwarding path for transmitting the real service packet in the detection domain.

For another example, both the analog service packet 1 and the real service packet 1 are layer-3 packets. The real service packet 1 carries a source IP address and a destination IP address. It is known that in the detection domain, an IP address of an ingress interface 11 used by the head node to receive the real service packet 1 is an IP address 11, and an IP address of an egress interface 12 used by the end node to forward the real service packet 1 to a user side is an IP address 12. It is determined, based on the source IP address and the destination IP address, that a forwarding path of the real service packet 1 in the network includes the forwarding path 1 determined based on a network segment to which the IP address 11 belongs and a network segment to which the IP address 12 belongs. If source IP addresses carried in two packets belong to a same network segment and destination IP addresses also belong to a same network segment, forwarding paths that may be determined for the two packets between two nodes are certainly the same. On this basis, to enable the analog service packet 1 generated by the head node to be transmitted in the detection domain along the forwarding path 1, the generated analog service packet 1 may also include a source IP address 3 and a destination IP address 4. The source IP address 3 and the IP address 11 belong to a same network segment, and the destination IP address 4 and the IP address 12 belong to a same network segment. In this way, it can be ensured that the detection packet 1 generated by the head node based on the analog service packet 1 is also transmitted in the detection domain along the forwarding path 1.

Before the method 100 is performed or after the method 100 is performed, the head node may further receive the real service packet 1 from the ingress interface (namely, the ingress interface 1). In addition, the head node forwards the real service packet 1 to the end node along the forwarding path 1. If the end node is not a destination node of the real service packet 1, the end node forwards the real service packet 1 to another node from the egress interface 2 on the end node until the real service packet 1 is forwarded to a user-side device. For example, the user-side device may be a device corresponding to the destination IP address of the real service packet 1. The device receives the real service packet 1 to provide a corresponding service for a user. In this way, even if a non-real service packet is used to complete in-situ flow metrics, because a detection packet simulates a forwarding path of a real service packet in the detection domain, the in-situ flow metrics method can completely and truly measure network performance of a forwarding path for transmitting the real service packet in the detection domain.

For example, in the network shown in FIG. 3, assuming that the network shown in FIG. 3 is a layer-3 network, when the head node detects network performance of the forwarding path 1, the generated analog service packet 1 may carry the source IP address 3 and the destination IP address 4. The source IP address 3 may be any IP address that belongs to a same network segment as the IP address 11 of the ingress interface 11 used by the head node to receive the real service packet 1, and the destination IP address 4 may be any IP address that belongs to a same network segment as the IP address 12 of the egress interface 12 used by the end node to send the real service packet 1. In addition, the detection packet 1 including the analog service packet 1 may further carry a source MAC address and a destination MAC address. The source MAC address may be any unicast MAC address other than a MAC address corresponding to the ingress interface 1 on the head node, and the destination MAC address may be the MAC address corresponding to the ingress interface 1 on the head node. It should be noted that before the detection packet 1 is forwarded from the head node to the intermediate node 1, the source MAC address needs to be replaced with a MAC address corresponding to an egress interface on the head node, and the destination MAC address needs to be replaced with a MAC address corresponding to an ingress interface on the intermediate node 1, to support normal forwarding of the layer-3 packet.

It should be noted that for the layer-3 analog service packet 1, the generated detection packet 1 may be specifically an IPv4 or IPv6 packet.

In this embodiment of this application, to provide a high-quality service for the user in the network, the detection packet 1 needs to be forwarded in the detection domain, and cannot be forwarded from the end node of the forwarding path 1 to another node outside the detection domain. On this basis, in the detection packet 1 generated by the head node, the in-situ flow metrics information 1 not only indicates each node receiving the detection packet 1 to perform in-situ flow metrics, but also carries the indication information 1 to indicate the end node of the forwarding path 1 in the detection domain not to forward the detection packet 1 to another node.

The indication information 1 may specifically correspond to different content based on different network environments. The indication information 1 may be, for example, obtained by extending a reserved field in an in-situ flow metrics header 1 of the packet header 1, for example, adding at least one bit, where information indicated by the at least one bit is the indication information 1. For another example, an identifier may be added to another field in an in-situ flow metrics header 1 of the packet header 1 to indicate the indication information 1. For still another example, the indication information 1 may be type information obtained after an in-situ flow metrics header 1 of the packet header 1 is extended. The indication information 1 may be one or more bits. This is not specifically limited in this application. The following describes some specific implementations of the indication information 1 by using examples.

For example, for an MPLS protocol network, the packet header 1 may be the in-situ flow metrics header 1, and the indication information 1 may be a value of a preset field or a flag bit carried in the in-situ flow metrics header 1. For example, the indication information 1 may be information indicated by at least one bit included in the in-situ flow metrics header 1. IFIT detection is used as an example. Referring to FIG. 1, the in-situ flow metrics header 1 may be a flow instruction header FIH field in FIG. 1, and the indication information 1 may be, for example, a value of a flag bit R in the FIH. For example, when the value of the flag bit R is 0, it may indicate that the detection packet 1 is passive in-situ flow metrics. On the contrary, when the value of the flag bit R is 1, it may indicate that the detection packet 1 is active in-situ flow metrics. For another example, the indication information 1 may be a value of a preset field in the in-situ flow metrics header 1. IFIT detection is still used as an example. Referring to FIG. 1, the indication information 1 may be specifically information indicated by a header type indicator HTI, and a value of the HIT can indicate whether the in-situ flow metrics header 1 includes a flow instruction extension header FIEH field or a type of an FIEH. Specifically, when the value of the HIT indicates that the in-situ flow metrics header 1 does not include an FIEH or includes an FIEH whose type is passive in-situ flow metrics, it is determined that the detection packet 1 is passive in-situ flow metrics. On the contrary, when the value of the HIT indicates that the in-situ flow metrics header 1 includes an FIEH whose type is active in-situ flow metrics, it is determined that the detection packet 1 is active in-situ flow metrics.

For another example, still for an MPLS protocol network, the packet header 1 includes an extended in-situ flow metrics header 1, and the indication information 1 may be carried in the extended in-situ flow metrics header 1, and may be specifically information indicated by a type field of the extended in-situ flow metrics header 1. IFIT detection is used as an example. Referring to FIG. 1, the extended in-situ flow metrics header 1 may be an FIEH shown in FIG. 1. In this case, the indication information 1 may be, for example, a value of a type field of the FIEH, and the value of the type field of the FIEH is used to indicate that the in-situ flow metrics are active in-situ flow metrics or passive in-situ flow metrics. Alternatively, the indication information 1 may be a value of any preset field or flag bit that may be used as an indication in the FIEH.

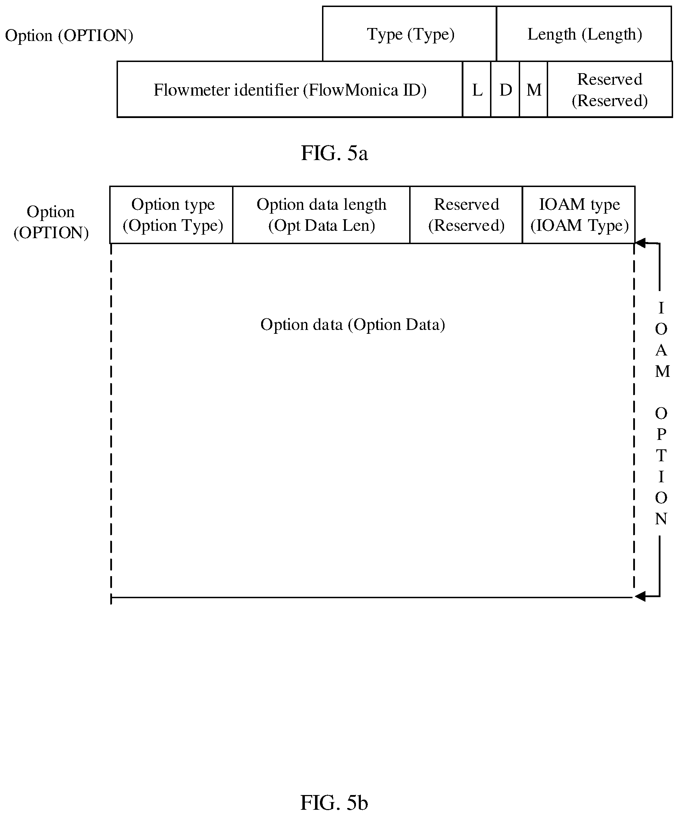

For still another example, for an IPv4 or IPv6 protocol network, the packet header 1 includes an option OPTION field, and the OPTION field may carry the indication information 1. The indication information 1 may be specifically information indicated by a type field of the OPTION field or information indicated by at least one bit included in the OPTION field. IFIT is used as an example. FIG. 5a shows a format of an extended OPTION field in the detection packet 1. The indication information 1 may be specifically information indicated by a type Type field of the extended OPTION field, or the indication information 1 may be values of one or more bits of a reserved Reserved field or another field. IOAM detection is used as an example. FIG. 5b shows a format of an extended OPTION field in the detection packet 1. The indication information 1 may be specifically information indicated by an IOAM Type field of the extended OPTION field, or the indication information 1 may be values of one or more bits of IOAM data Data. For IOAM detection, a packet header 1 of IOAM may be specifically encapsulated in an IPv6 packet header, a virtual extensible local area network (English: Virtual Extensible Local Area Network, VXLAN for short) packet header, or an IPv4 packet header. For an SRv6 protocol network, a packet header 1 of IOAM may be alternatively encapsulated in an SRH.

It should be noted that for related descriptions of the in-situ flow metrics technology in this application, refer to related descriptions in the following IETF drafts "IPv6 Application of the Alternate Marking Method draft-fz-6man-ipv6-alt-mark-01", "In-situ OAM IPv6 Options draft-ioametal-ippm-6man-ioam -ipv6-options-02", and "VXLAN-GPE Encapsulation for In-situ OAM Data draft-brockners-ippm-ioam-vxlan-gpe-03". The drafts are incorporated herein by reference in their entireties.

In some specific implementations, after the head node in the detection domain generates the detection packet 1, the head node may measure network performance based on the in-situ flow metrics information 1 in the detection packet 1 to obtain a measurement result 0.

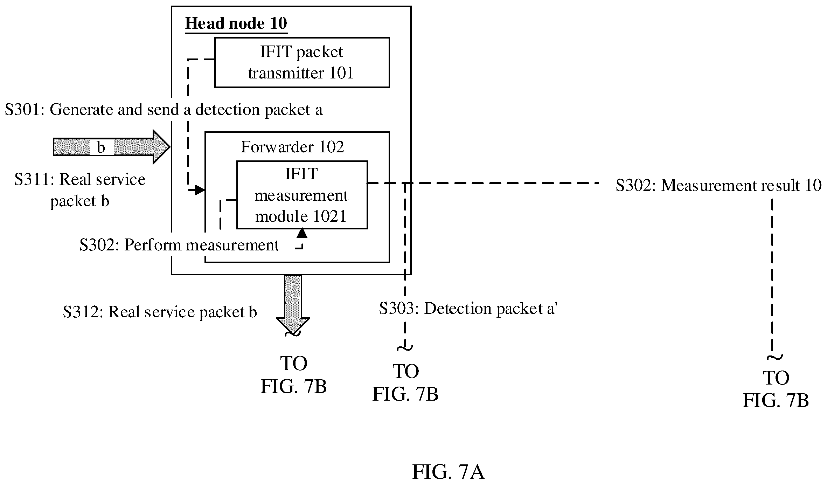

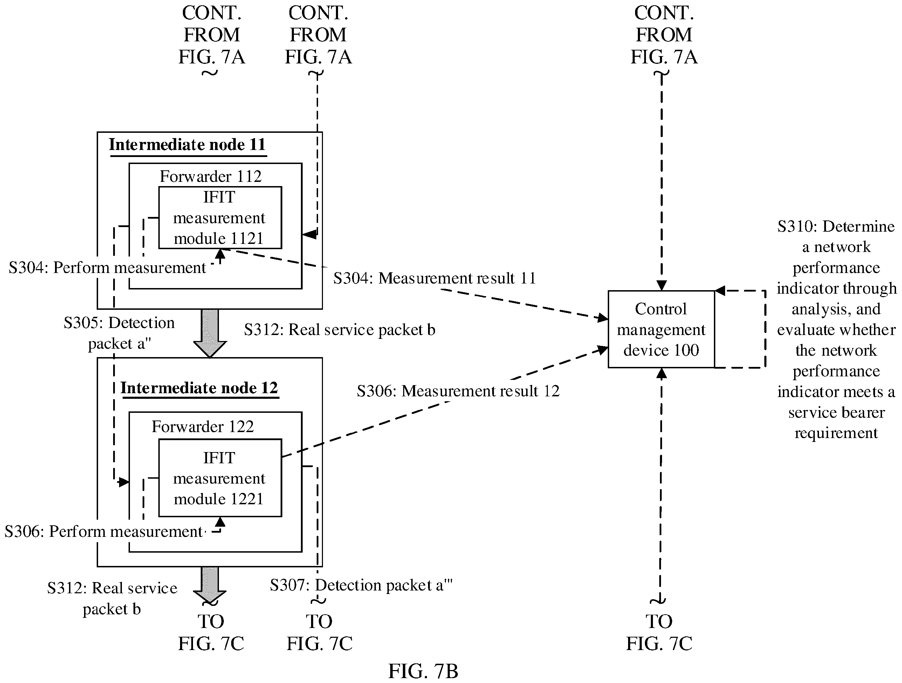

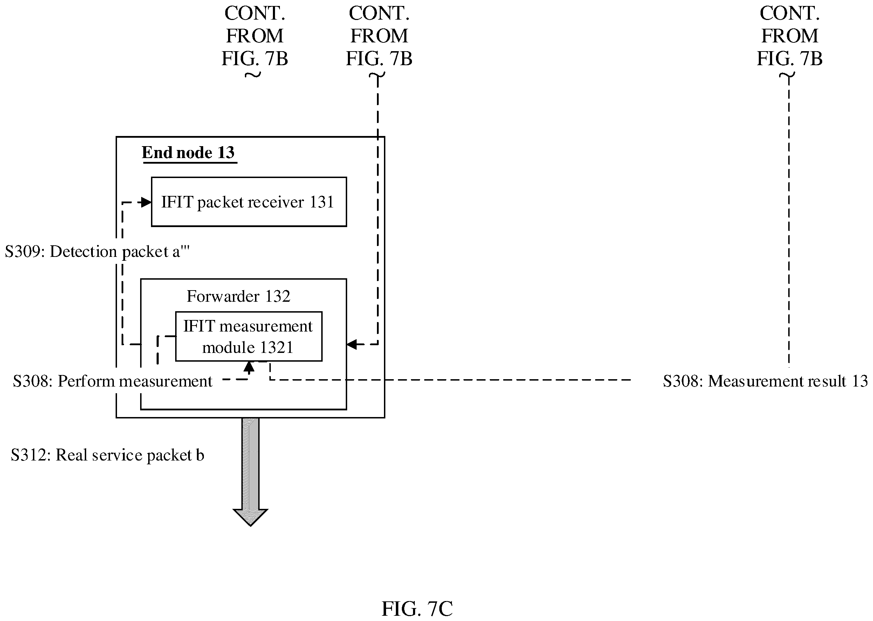

For example, for a specific structure of the head node, refer to a head node 10 in a network architecture in an embodiment shown in FIG. 7A, FIG. 7B, and FIG. 7C. In addition to a packet transmitter 101 configured to generate a detection packet, the head node 10 includes a forwarder 102, and the forwarder 102 includes a measurement module 1021 configured to implement in-situ flow metrics. In this case, a process in which the head node measures the network performance based on the in-situ flow metrics information 1 in the detection packet 1 may include: S21: The head node 10 transmits the detection packet 1 generated by the packet transmitter 101 to the forwarder 102. S22: The forwarder 102 identifies that the received detection packet 1 is an active in-situ flow metrics packet, and the measurement module 1021 measures the network performance based on the in-situ flow metrics information 1 in the detection packet 1 to obtain the measurement result 0. The measurement result 0 may include, for example, a packet count and a timestamp, and is used to reflect network performance of the head node 10 and a link connected to the head node 10.

It should be noted that the in-situ flow metrics information 1 can indicate whether the in-situ flow metrics are active in-situ flow metrics or passive in-situ flow metrics, and further include identification information 2 that can indicate whether the in-situ flow metrics are edge-to-edge (English: Edge to Edge, E2E for short) in-situ flow metrics or hop-by-hop in-situ flow metrics. In one case, the identification information 2 may be the indication information 1, in other words, the indication information 1 can indicate whether the detection packet 1 is E2E active in-situ flow metrics or hop-by-hop active in-situ flow metrics. In this case, referring to the MPLS network environment shown in FIG. 1, the indication information 1 may be, for example, information indicated by an HTI field. The following may be defined: HTI=0 indicates "reserved", HTI=1 indicates that the packet header 1 is a basic E2E FIH (in other words, does not include an FIEH), HTI=2 indicates that the packet header 1 is a normal hop-by-hop FIH, HTI=3 indicates that the packet header 1 includes an E2E FIEH (namely, an FIEH whose type is passive in-situ flow metrics), and HTI=4 indicates that the packet header 1 includes a hop-by-hop FIEH. Based on the foregoing definition, a definition of an extended HTI type may be added. To be specific, the following may be defined: HTI=5 indicates that the packet header 1 includes an E2E active metrics FIEH, and HTI=6 indicates that the packet header 1 includes a hop-by-hop active metrics FIEH. In another case, the identification information 2 may be information other than the indication information 1, and is used to separately identify whether the detection packet 1 uses an E2E or a hop-by-hop detection mechanism.

It may be understood that in hop-by-hop active in-situ flow metrics, each node in the forwarding path 1 is required to send an obtained measurement result to a control management device after performing network performance measurement. In E2E active in-situ flow metrics, after performing network performance measurement, each node in the forwarding path 1 is required to add an obtained measurement result to a detection packet and send the measurement result to a next hop, until the end node obtains a corresponding measurement result and then sends, to the control management device, the measurement result of the end node and a measurement result that is carried in the detection packet and that corresponds to each hop of node. For S101, when identifying that the generated detection packet 1 corresponds to hop-by-hop active in-situ flow metrics, the head node needs to send the obtained measurement result 0 to the control management device and perform S102. When identifying that the generated detection packet 1 corresponds to E2E active in-situ flow metrics, the head node may add the obtained measurement result 0 to the detection packet 1 to obtain the detection packet 1 in S102, to continue to perform the method 100.

S102: The head node sends the detection packet 1 to the intermediate node 1 along the forwarding path 1.

After the head node in the detection domain generates the detection packet 1, the head node may measure the network performance based on the in-situ flow metrics information 1 in the detection packet 1 to obtain the measurement result 0. The head node may further send the detection packet 1 to the intermediate node 1 along the forwarding path 1, so that the intermediate node 1 measures network performance based on the in-situ flow metrics information 1 in the detection packet 1.

For example, still referring to the network architecture in the embodiment shown in FIG. 7A, FIG. 7B, and FIG. 7C, the head node 10 determines, based on the determined forwarding path 1, that a next hop is an intermediate node 11. In this case, the forwarder 102 of the head node may forward the detection packet 1 to a forwarder 112 of the intermediate node 11.

S103: The intermediate node 1 performs in-situ flow metrics on the network performance based on the in-situ flow metrics information 1 in the detection packet 1.

In some specific implementations, after the intermediate node 1 receives the detection packet 1, the intermediate node 1 may measure the network performance based on the in-situ flow metrics information 1 in the detection packet 1 to obtain a measurement result 1.

For example, for the intermediate node 1, refer to the intermediate node 11 in the network architecture in the embodiment shown in FIG. 7A, FIG. 7B, and FIG. 7C. The intermediate node 11 includes the forwarder 112, and the forwarder 112 includes a measurement module 1121 configured to implement in-situ flow metrics. In this case, a process in which the intermediate node measures the network performance based on the in-situ flow metrics information 1 in the detection packet 1 may include: S31: The intermediate node 11 transmits the received detection packet 1 to the forwarder 112. S32: The forwarder 112 identifies that the received detection packet 1 is an active in-situ flow metrics packet, and the measurement module 1121 measures the network performance based on the in-situ flow metrics information 1 in the detection packet 1 to obtain the measurement result 1. The measurement result 1 is used to reflect network performance of the intermediate node 11 and a link connected to the intermediate node 11.

S104: The intermediate node 1 updates the detection packet 1 to obtain a detection packet 1', where the detection packet 1' includes in-situ flow metrics information 1'.

When identifying that the received detection packet 1 corresponds to hop-by-hop active in-situ flow metrics, the intermediate node 1 needs to send the obtained measurement result 1 to the control management device; or when identifying that the received detection packet 1 corresponds to E2E active in-situ flow metrics, the intermediate node 1 may add the obtained measurement result 1 to the detection packet 1.

During specific implementation, the intermediate node 1 identifies that the intermediate node 1 is not the end node of the forwarding path 1 in the detection domain, and updates the detection packet 1 to the detection packet 1'. The detection packet 1' includes the in-situ flow metrics information 1', and the in-situ flow metrics information 1' still includes the indication information 1. In addition, when the in-situ flow metrics are E2E active in-situ flow metrics, the detection packet 1' further includes the measurement result 0 and the measurement result 1; or when the in-situ flow metrics are hop-by-hop active in-situ flow metrics, the detection packet 1' may not include the measurement result 0 or the measurement result 1.

S105: The intermediate node 1 sends the detection packet 1' to the intermediate node 2 along the forwarding path 1.

S106: The intermediate node 2 performs in-situ flow metrics on network performance based on the in-situ flow metrics information 1' in the detection packet 1'.

S107: The intermediate node 2 updates the detection packet 1' to obtain a detection packet 1", where the detection packet 1" includes in-situ flow metrics information 1".

S108: The intermediate node 2 sends the detection packet 1" to the end node in the detection domain along the forwarding path 1.

It should be noted that for details of related concept descriptions, specific implementation, and achieved effects of S105 and S108, refer to S102, for details of related concept descriptions, specific implementation, and an achieved effect of S106, refer to S103, and for details of related concept descriptions, specific implementation, and an achieved effect of S107, refer to S104.

After the intermediate node 2 receives the detection packet 1', the intermediate node 2 may measure the network performance based on the in-situ flow metrics information 1' in the detection packet 1' to obtain a measurement result 2.

S109: The end node performs in-situ flow metrics on network performance based on the in-situ flow metrics information 1" in the detection packet 1".

In some specific implementations, after the end node in the detection domain generates the detection packet 1", the end node may measure the network performance based on the in-situ flow metrics information 1" in the detection packet 1" to obtain a measurement result 3.

For example, for a specific structure of the end node, refer to an end node 13 in the network architecture in the embodiment shown in FIG. 7A, FIG. 7B, and FIG. 7C. In addition to a forwarder 132, the end node 13 includes a packet receiver 131 configured to collect a detection packet, and the forwarder 132 includes a measurement module 1321 configured to implement in-situ flow metrics. In this case, a process in which the end node measures the network performance based on the in-situ flow metrics information 1" in the detection packet 1" may include: S41: The end node 13 transmits the received detection packet 1" to the forwarder 132. S42: The forwarder 132 identifies that the received detection packet 1" is an active in-situ flow metrics packet, and the measurement module 1321 measures the network performance based on the in-situ flow metrics information 1" in the detection packet 1" to obtain the measurement result 3.

S110: The end node determines, based on the indication information 1 included in the in-situ flow metrics information 1" in the detection packet 1", not to forward the detection packet 1" to another node.

After S109, to prevent the detection packet exclusively used for detection from flowing out of the detection domain to affect a service provided for the user, the in-situ flow metrics information 1" of the detection packet 1" carries the indication information 1 to indicate the end node in the detection domain not to forward the detection packet 1" to another node. In this case, in the example corresponding to S41 and S42, the following may be further included after S42: S43: The end node 13 parses the detection packet 1" to obtain the indication information 1, and determines that the end node 13 is the end node of the forwarding path 1 in the detection domain, and the end node 13 may terminate the detection packet 1" to prevent traffic from being sent to a network outside the detection domain. The end node 13 may terminate the detection packet 1" in the following implementation: The end node 13 directly deletes the detection packet 1". Alternatively, the end node may terminate the detection packet 1" in the following implementation: The forwarder 132 of the end node 13 may send the detection packet 1" to the packet receiver 131, and the packet receiver 131 stores or deletes the detection packet 1". Because the packet receiver 131 is a module in the end node 13 and does not have an interface for communicating with another node, the end node 13 can also be prevented from forwarding the detection packet 1" to another node.

It can be learned that in the active in-situ flow metrics method 100 provided in this embodiment of this application, a current in-situ flow metrics protocol is extended, so that even in a network scenario in which there is no real service traffic, the head node in the detection domain can autonomously generate a detection packet used for in-situ flow metrics, making it possible to perform in-situ flow measurement on network performance based on an in-situ flow metrics technology. Therefore, the method provided in this embodiment of this application is equivalent to providing a new in-situ flow metrics mechanism, and only one extended in-situ flow metrics protocol needs to be configured to complete both active in-situ flow metrics and passive in-situ flow metrics, so that various scenarios of network performance detection can be covered, thereby facilitating network performance detection. In addition, in the method 100, when an active in-situ flow metrics technology is used, a detection packet generated by the head node further needs to carry indication information to notify the end node that the end node receives a detection packet exclusively used for network performance measurement and indicate the end node not to forward the detection packet to another node. In this way, the detection packet that is not a real service packet and that is exclusively used for measurement is terminated by the end node, and is not forwarded by the end node to a node outside the detection domain, so that a real service provided for the user is prevented from being affected, thereby making the network performance detection mechanism more intelligent.

It should be noted that, when the control management device determines, through analysis, that network performance detection on the forwarding path 1 in the detection domain succeeds, the real service packet can be transmitted by using the forwarding path 1. During specific implementation, if the head node determines, when receiving the real service packet 1, that a forwarding path of the real service packet 1 is the forwarding path 1, the head node forwards the real service packet 1 out of the detection domain by using the intermediate node 1, the intermediate node 2, and the end node, and the end node forwards the real service packet 1 to another node outside the detection domain until the real service packet 1 is transmitted to a destination node of the real service packet 1.

When network performance detection is to be performed on a plurality of paths between the head node and the end node, the head node may generate different detection packets based on different to-be-detected forwarding paths, and separately perform network performance measurement on the different to-be-detected forwarding paths. Measurement processes of the two are basically the same and independent of each other.

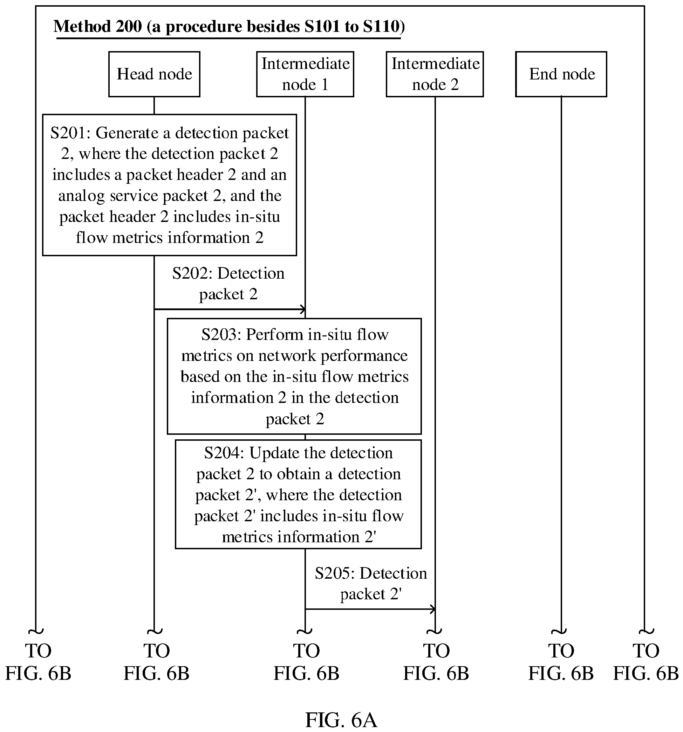

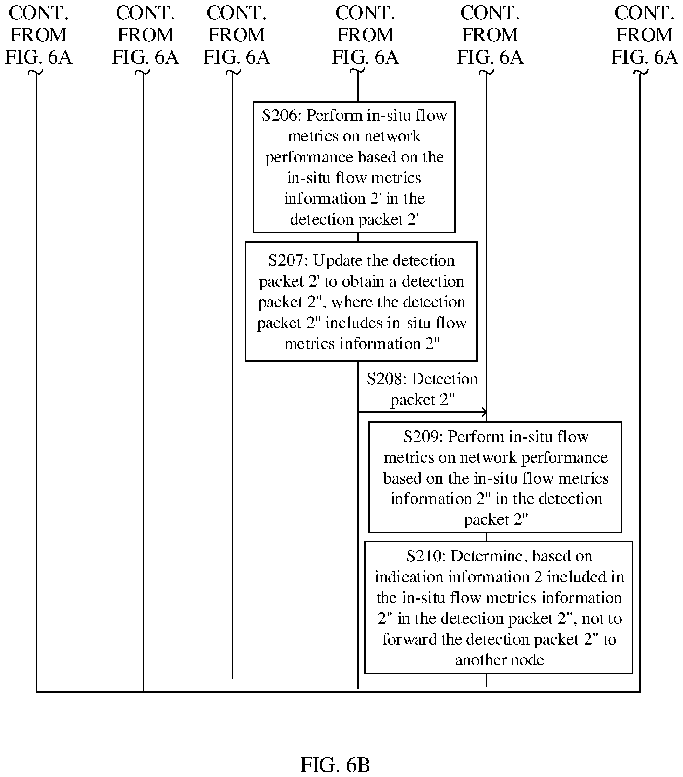

Still using the network scenario 200 shown in FIG. 3 as an example, this application further provides an active in-situ flow metrics method 200. As shown in FIG. 6Aand FIG. 6B, in addition to S101 to S110 for performing measurement on the forwarding path 1 in the foregoing method 100, the method 200 may include S201 to S210 used to measure a forwarding path 2.

S201: The head node in the detection domain generates a detection packet 2, where the detection packet 2 includes a packet header 2 and an analog service packet 2 generated by the head node, and the packet header 2 includes in-situ flow metrics information 2.

Similar to the analog service packet 1, the analog service packet 2 is not a real service packet sent by the user equipment. The forwarding path 2 that is of the detection packet 2 in the detection domain and that is determined based on the analog service packet 2 is used to simulate a forwarding path, in the detection domain, of a real service packet 2 sent by the user equipment. The packet header 2 includes the in-situ flow metrics information 2, the in-situ flow metrics information 2 is used by a node in the forwarding path 2 to perform in-situ flow metrics on network performance, the in-situ flow metrics information 2 includes indication information 2, and the indication information 2 is used to indicate the end node in the detection domain not to forward the detection packet 2 to another node.

It should be noted that the analog service packet 2 and the analog service packet 1 are different in at least one of a protocol number, a transmission control protocol (English: Transmission Control Protocol, TCP for short) port number, and a user datagram protocol (English: User Datagram Protocol, UDP for short) port number. In this case, it is determined to test network performance for different forwarding paths after the head node generates the two detection packets. For example, if the analog service packet 2 and the analog service packet 1 have different protocol numbers, the head node separately determines different forwarding paths of the analog service packet 1 and the analog service packet 2 in the detection domain based on the different protocol numbers. For another example, if the analog service packet 2 and the analog service packet 1 carry different TCP port numbers (or UDP port numbers), the head node separately determines different forwarding paths of the analog service packet 1 and the analog service packet 2 in the detection domain based on the different TCP port numbers (or UDP port numbers). For still another example, if the analog service packet 2 and the analog service packet 1 have different protocol numbers and carry different TCP port numbers (or UDP port numbers), the head node separately determines different forwarding paths of the analog service packet 1 and the analog service packet 2 in the detection domain based on the different protocol numbers and TCP port numbers (or UDP port numbers).

S202: The head node sends the detection packet 2 to an intermediate node 3 along the forwarding path 2.

S203: The intermediate node 3 performs in-situ flow metrics on network performance based on the in-situ flow metrics information 2 in the detection packet 2.

S204: The intermediate node 3 updates the detection packet 2 to obtain a detection packet 2', where the detection packet 2' includes in-situ flow metrics information 2'.

S205: The intermediate node 3 sends the detection packet 2' to an intermediate node 4 along the forwarding path 2.

S206: The intermediate node 4 performs in-situ flow metrics on network performance based on the in-situ flow metrics information 2' in the detection packet 2'.

S207: The intermediate node 4 updates the detection packet 2' to obtain a detection packet 2", where the detection packet 2" includes in-situ flow metrics information 2".

S208: The intermediate node 4 sends the detection packet 2" to the end node in the detection domain along the forwarding path 2.

S209: The end node performs in-situ flow metrics on network performance based on the in-situ flow metrics information 2" in the detection packet 2".

S210: The end node determines, based on the indication information 2 included in the in-situ flow metrics information 2" in the detection packet 2", not to forward the detection packet 2" to another node.

It should be noted that for details of related concept descriptions, specific implementation, and achieved effects of S201 to S210, refer to S101 to S110, and details are not described herein again.

It can be learned that in the active in-situ flow metrics method 200 provided in this embodiment of this application, a current in-situ flow metrics protocol is extended, so that even in a network scenario in which there is no real service traffic, the head node in the detection domain can autonomously generate a detection packet used for in-situ flow metrics, making it possible to perform in-situ flow measurement on network performance based on an in-situ flow metrics technology. In addition, because the detection packet carries indication information, the detection packet that is not a real service packet and that is exclusively used for measurement is terminated by the end node, and is not forwarded by the end node to a node outside the detection domain, so that a real service provided for the user is prevented from being affected, thereby making the network performance detection mechanism more intelligent. In addition, in the method 200, a plurality of forwarding paths with a same head node and a same end node in the detection domain can be detected, so that the network performance detection mechanism can adapt to more network scenarios, thereby implementing more complete network performance measurement in the detection domain.

It should be noted that when the control management device determines, through analysis, that network performance detection on both the forwarding path 1 and the forwarding path 2 in the detection domain succeeds, a real service packet can be transmitted by using the forwarding path 1 and the forwarding path 2. During specific implementation, when the head node receives the real service packet 2, the head node may determine a forwarding path of the real service packet 2 based on at least one of a protocol number, a TCP port number, and a UDP port number carried in the real service packet 2, and transmit the real service packet 2 along the determined forwarding path. In one case, if the head node determines that the protocol number and/or the TCP port number and/or the UDP port number carried in the real service packet 2 are or is correspondingly the same as a protocol number and/or a TCP port number and/or a UDP port number carried in the detection packet 1, the head node determines that the forwarding path of the real service packet 2 is the forwarding path 1, and forwards the real service packet 2 out of the detection domain by using the intermediate node 1, the intermediate node 2, and the end node. In another case, if the head node determines that at least one of the protocol number, the TCP port number, and the UDP port number carried in the real service packet 2 is correspondingly the same as at least one of a protocol number, a TCP port number, and a UDP port number that are carried in the detection packet 2, the head node determines that the forwarding path of the real service packet 2 is the forwarding path 2, and forwards the real service packet 2 out of the detection domain by using the intermediate node 3, the intermediate node 4, and the end node.

To make the method 100 and the method 200 provided in embodiments of this application clearer, with reference to a schematic diagram shown in FIG. 7A, FIG. 7B, and FIG. 7C, the following uses IFIT as an example to describe internal structures (only a part used in an implementation process of embodiments of this application is considered) of nodes in a detection domain and an active in-situ flow metrics process in the network scenario 100.

Referring to FIG. 7A, FIG. 7B, and FIG. 7C, the network includes a control management device 100, a head node 10, an intermediate node 11, an intermediate node 12, and an end node 13. The head node 10 includes an IFIT packet transmitter 101 configured to generate a detection packet and a forwarder 102, and the forwarder 102 includes an IFIT measurement module 1021. The intermediate node 11 includes a forwarder 112, and the forwarder 112 includes an IFIT measurement module 1121. The intermediate node 12 includes a forwarder 122, and the forwarder 122 includes an IFIT measurement module 1221. The end node 13 includes an IFIT packet receiver 131 configured to terminate a detection packet and a forwarder 132, and the forwarder 132 includes an IFIT measurement module 1321. The control management device 100 is configured to: collect measurement results of nodes in a detection domain, and perform analysis and management.

In the network shown in FIG. 7A, FIG. 7B, and FIG. 7C, an extended IFIT protocol provided in embodiments of this application is configured. If there is real service traffic in a forwarding path X: head node 10->intermediate node 11->intermediate node 12->end node 13, network performance measurement is performed on nodes and links in the forwarding path X in the detection domain according to a current IFIT passive in-situ flow metrics mechanism. Details are not described herein. If there is no real service traffic in the forwarding path X (for example, the nodes are just enabled, and no real service packet temporarily enters a service channel after configuration of the service channel is completed, but network performance of the newly configured channel needs to be measured; for another example, some of a plurality of forwarding paths between the head node and the end node are used as protection paths and usually do not carry a real service packet, but performance indicators of the protection paths need to be measured), network performance measurement may be performed on the nodes and the links in the forwarding path X in the detection domain according to S301 to S312.

S301: The IFIT packet transmitter 101 of the head node 10 generates a detection packet a, and sends the detection packet to the forwarder 102, where the detection packet a includes a packet header a and an analog service packet a, the packet header a includes an in-situ flow metrics header a, the in-situ flow metrics header a includes indication information 1, and the instruction information 1 is used to indicate that detection of the detection packet a is hop-by-hop active in-situ flow metrics and indicate the end node 13 not to forward the detection packet a to another node.

S302: The forwarder 102 of the head node 10 identifies that detection of the detection packet a is hop-by-hop active in-situ flow metrics, and the IFIT measurement module 1021 of the forwarder 102 performs network performance measurement based on the in-situ flow metrics header a to obtain a measurement result 10, and sends the measurement result 10 to the control management device 100.

S303: The forwarder 102 of the head node 10 updates the detection packet a to obtain a detection packet a', and sends the detection packet a' to the intermediate node 11, where the detection packet a' includes an in-situ flow metrics header a'.

S304: The IFIT measurement module 1121 of the forwarder 112 of the intermediate node 11 performs network performance measurement based on the in-situ flow metrics header a' to obtain a measurement result 11, and sends the measurement result 11 to the control management device 100.

S305: The forwarder 112 of the intermediate node 11 updates the detection packet a' to obtain a detection packet a", and sends the detection packet a" to the intermediate node 12, where the detection packet a" includes an in-situ flow metrics header a".

S306: The IFIT measurement module 1221 of the forwarder 122 of the intermediate node 12 performs network performance measurement based on the in-situ flow metrics header a" to obtain a measurement result 12, and sends the measurement result 12 to the control management device 100.

S307: The forwarder 122 of the intermediate node 12 updates the detection packet a" to obtain a detection packet a‴, and sends the detection packet a‴ to the intermediate node 12, where the detection packet a‴ includes an in-situ flow metrics header a‴.

S308: The IFIT measurement module 1321 of the forwarder 132 of the end node 13 performs network performance measurement based on the in-situ flow metrics header a‴ to obtain a measurement result 13, and sends the measurement result 13 to the control management device 100.

S309: The end node 13 determines, according to the indication information 1 included in the in-situ flow metrics header a‴ in the detection packet a‴, not to forward the detection packet a‴ to another node, and sends the detection packet a‴ to the IFIT packet receiver 131 of the end node 13.

S310: The control management device 100 determines a performance indicator of the forwarding path X through analysis based on the received measurement results 10 to 13, evaluates whether the performance indicator meets a service bearer requirement, and if the performance indicator meets the service bearer requirement, determines that the forwarding path X passes the test.

When the control management device 100 determines, through evaluation in S310, that the forwarding path X can meet the service bearer requirement, this embodiment may further include the following steps:

S311: The head node 10 receives a real service packet b, where the real service packet b and the detection packet a carry a same protocol number and a same TCP/UDP port number.

S312: The head node 10 determines that a transmission path passes through the forwarding path X, and forwards the real service packet b along the forwarding path X by using the intermediate node 11, the intermediate node 12, and the end node 13, and the end node 13 sends the real service packet b to another node until the real service packet b is transmitted to a destination node of the real service packet b, to provide a high-quality service for a user.

It should be noted that in this embodiment, hop-by-hop active in-situ flow metrics in a case of IFIT are used as an example for description. An implementation of active in-situ flow metrics in a case of another protocol (for example, IOAM) and detection mechanism (for example, E2E) is similar to the foregoing implementation. In the case of IOAM, a measurement module included in each node is an IOAM measurement module, the packet transmitter of the head node is an IOAM packet transmitter, the packet receiver of the end node is an IOAM packet receiver, a detection packet carries in-situ flow metrics information corresponding to IOAM, and a detection process is basically consistent. Details are not described one by one.

In this way, both a scenario in which there is real service traffic and a scenario lacking real service traffic can be covered based on a same in-situ flow metrics protocol. Therefore, only one measurement protocol needs to be configured to be compatible with a plurality of network scenarios for network performance measurement, the configuration is simple, and compatibility is strong.

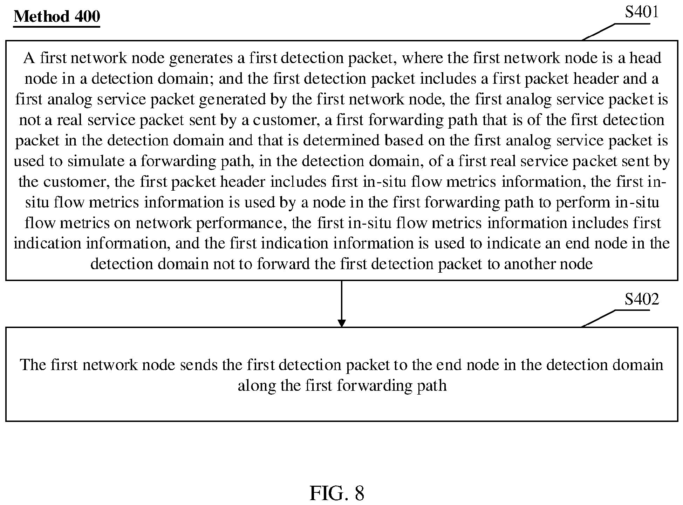

FIG. 8 is a schematic flowchart of an active in-situ flow metrics method 400 according to an embodiment of this application. The method 400 is applied to a detection domain of in-situ flow metrics, and is performed by a head node, namely, a first network node, in the detection domain. The active in-situ flow metrics method 400 may include, for example, the following steps:

S401: The first network node generates a first detection packet, where the first network node is the head node in the detection domain; and the first detection packet includes a first packet header and a first analog service packet generated by the first network node, the first analog service packet is not a real service packet sent by user equipment, a first forwarding path that is of the first detection packet in the detection domain and that is determined based on the first analog service packet is used to simulate a forwarding path, in the detection domain, of a first real service packet sent by the user equipment, the first packet header includes first in-situ flow metrics information, the first in-situ flow metrics information is used by a node in the first forwarding path to perform in-situ flow metrics on network performance, the first in-situ flow metrics information includes first indication information, and the first indication information is used to instruct an end node in the detection domain not to forward the first detection packet to another node.

S402: The first network node sends the first detection packet to the end node in the detection domain along the first forwarding path.

It may be understood that the first network node may be the head node in FIG. 2 or FIG. 3 or the head node 10 in FIG. 7A, FIG. 7B, and FIG. 7C. For a specific operation performed by the first network node, refer to operations performed by the head node in the method 100 and the method 200, or refer to a corresponding operation performed by the head node 10 in FIG. 7A, FIG. 7B, and FIG. 7C. The first detection packet may be the detection packet 1 in the method 100 and the method 200. In this case, the first analog service packet may be the analog service packet 1 in the method 100 and the method 200, the first packet header may be the packet header 1 in the method 100 and the method 200, the first indication information may be the indication information 1 in the method 100 and the method 200, and the first forwarding path may be the forwarding path 1 in the method 100 and the method 200. Alternatively, the first detection packet may be the detection packet a in the method shown in FIG. 7A, FIG. 7B, and FIG. 7C. In this case, the first analog service packet may be the analog service packet a in the method shown in FIG. 7A, FIG. 7B, and FIG. 7C, the first packet header may be the packet header a in the method shown in FIG. 7A, FIG. 7B, and FIG. 7C, the first indication information may be the indication information a in the method shown in FIG. 7A, FIG. 7B, and FIG. 7C, and the first forwarding path may be the forwarding path X in the method shown in FIG. 7A, FIG. 7B, and FIG. 7C.

For example, the first packet header may include a first in-situ flow metrics header, and the first in-situ flow metrics header includes the first indication information. The first indication information is information indicated by at least one bit included in the first in-situ flow metrics header.

For another example, the first packet header may include a first extended in-situ flow metrics header, the first extended in-situ flow metrics header is used to carry the first indication information, and a type field of the first extended in-situ flow metrics header indicates that the in-situ flow metrics are active in-situ flow metrics.

For still another example, the first packet header may include an option OPTION field, and the OPTION field includes the first indication information. For example, the first indication information is information indicated by at least one bit included in the OPTION field. For another example, the first indication information is information indicated by a type field of the OPTION field, and the type field indicates that the in-situ flow metrics are active in-situ flow metrics.

The three examples are merely example descriptions of adding the first indication information to the first detection packet in this embodiment of this application. The foregoing three possible implementations are included but do not constitute a limitation. Any other information that can be used to indicate that the in-situ flow metrics are active in-situ flow metrics may be used as the first indication information in this embodiment of this application, and any packet header that can carry the first indication information may be used as the first packet header in this embodiment of this application.

In the method 400, the in-situ flow metrics may be IFIT in-situ flow metrics, IOAM in-situ flow metrics, or INT in-situ flow metrics. Any in-situ flow metrics protocol may be extended by using the method provided in this embodiment of this application to support the active in-situ flow metrics method provided in this embodiment of this application.

In the method 400, the in-situ flow metrics may be edge-to-edge E2E active in-situ flow metrics, or may be hop-by-hop active in-situ flow metrics. Details may be flexibly set based on an in-situ flow metrics requirement.

A specific process in which the first network node generates the first detection packet in S401 may include: The first network node generates the first analog service packet. The first network node encapsulates the first in-situ flow metrics information in the first analog service packet. For a specific process, refer to related descriptions of S11 and S12 in the method 100.

For example, the first analog service packet may be a layer-2 packet, the layer-2 packet includes a virtual local area network VLAN identifier, and the VLAN identifier is used to identify a VLAN to which the user equipment belongs. The method 400 may further include: The first network node receives the first real service packet. The first real service packet carries a same VLAN identifier as the first analog service packet. The first network node forwards the first real service packet to the end node along the first forwarding path. For a private-line service, considering that a layer-2 packet is forwarded under guidance of a VLAN to which the layer-2 packet belongs, the layer-2 analog service packet generated by the head node carries a VLAN identifier carried in the real service packet, and simulates the layer-2 real service packet to enter an ingress port on the head node, so that the analog service packet is transmitted in the detection domain along a same forwarding path as the real service packet, and therefore a measurement result of network performance measurement is of real reference significance to forwarding of the real service packet in the detection domain. For a dedicated-network service, considering that a layer-2 packet is forwarded under guidance of a VLAN to which the layer-2 packet belongs and a destination MAC address of the layer-2 packet, the layer-2 analog service packet generated by the head node carries a VLAN identifier and a destination MAC address that are carried in the real service packet, and simulates the layer-2 real service packet to enter an ingress port on the head node, so that the analog service packet is transmitted in the detection domain along a same forwarding path as the real service packet, and therefore a measurement result of network performance measurement is of real reference significance to forwarding of the real service packet in the detection domain.

For another example, the first analog service packet may be a layer-3 packet, the layer-3 packet includes a source Internet protocol IP address and a destination IP address, the source IP address is an IP address that belongs to a same network segment as an IP address of an ingress interface used by the first network node to receive the first real service packet, and the destination IP address is an IP address that belongs to a same network segment as an IP address of an egress interface used by the end node to forward the first real service packet to a user side. The method 400 may further include: The first network node receives the first real service packet by using the ingress interface. The first network node forwards the first real service packet to the end node along the first forwarding path. Considering that a layer-3 packet is forwarded under guidance of a source IP address and a destination IP address, and forwarding paths of packets with source IP addresses in a same network segment and destination IP addresses in a same network segment are consistent, because network segments to which the source IP address and the destination IP address that are carried in the layer-3 analog service packet generated by the head node belong are correspondingly the same as network segments to which a source IP address and a destination IP address that are carried in the real service packet belong, the analog service packet is transmitted in the detection domain along a same forwarding path as the real service packet, so that a measurement result of network performance measurement is of real reference significance to forwarding of the real service packet in the detection domain.

In other specific implementations, the method 400 further includes: The first network node generates a second detection packet. The first detection packet and the second detection packet have different protocol numbers and/or transmission control protocol TCP/user datagram protocol UDP port numbers. The second detection packet includes a second packet header and a second analog service packet generated by the first network node, a second forwarding path that is of the second detection packet in the detection domain and that is determined based on the second analog service packet is used to simulate a forwarding path, in the detection domain, of a second real service packet sent by the user equipment, the second packet header includes second in-situ flow metrics information, the second in-situ flow metrics information is used by a node in the second forwarding path to perform in-situ flow metrics on network performance, the second in-situ flow metrics information includes second indication information, and the second indication information is used to indicate the end node not to forward the second detection packet to another node. The first network node forwards the second detection packet to the end node along the second forwarding path.

In this implementation, the method 400 may further include: The first network node receives the second real service packet sent by the user equipment. The second real service packet and the second detection packet carry a same protocol number and a same TCP/UDP port number. The first network node forwards the second real service packet to the end node along the second forwarding path.

It may be understood that, for details of this implementation, refer to the method 200 shown in FIG. 6A and FIG. 6B. The second detection packet may be the detection packet 2 in the method 200. In this case, the second analog service packet may be the analog service packet 2 in the method 200, the second packet header may be the packet header 2 in the method 200, the second indication information may be the indication information 2 in the method 200, and the second forwarding path may be the forwarding path 2 in the method 200. In this way, in this implementation, a plurality of forwarding paths with a same head node and a same end node in the detection domain can be detected to provide data support for normal transmission, in a network, of different real service packets that need to be transmitted along different forwarding paths, so that the network performance detection mechanism can adapt to more network scenarios, thereby implementing more complete network performance measurement in the detection domain.

It should be noted that for a specific implementation and an achieved effect of the method 400 in this embodiment of this application, refer to related descriptions in the foregoing embodiments shown in FIG. 4A and FIG. 4B, FIG. 6A and FIG. 6B, and FIG. 7A, FIG. 7B, and FIG. 7C.

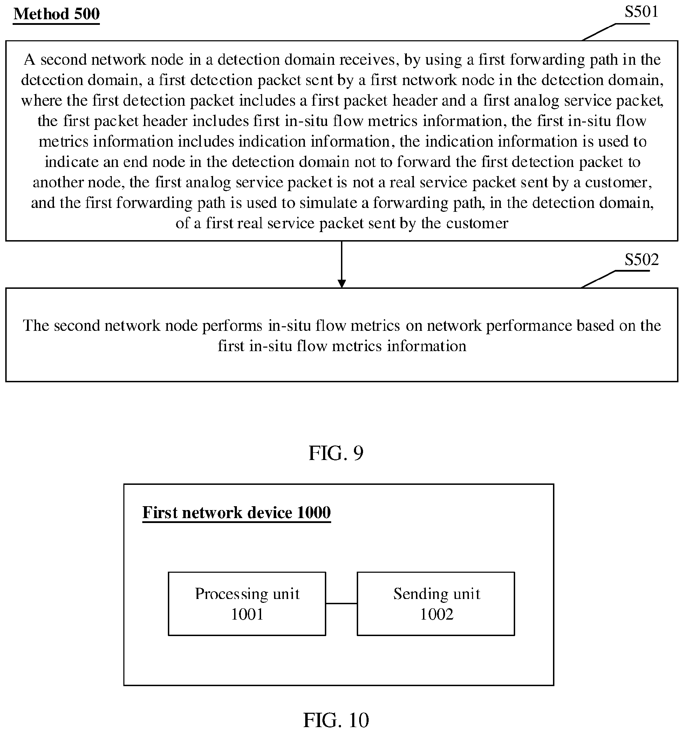

FIG. 9 is a schematic flowchart of another active in-situ flow metrics method 500 according to an embodiment of this application. The method 500 is applied to a detection domain of in-situ flow metrics, and is performed by any node, namely, a second network node, after a head node in the detection domain. The active in-situ flow metrics method 500 may include, for example, the following steps:

S501: The second network node in the detection domain receives, by using a first forwarding path in the detection domain, a first detection packet sent by a first network node in the detection domain, where the first detection packet includes a first packet header and a first analog service packet, the first packet header includes first in-situ flow metrics information, the first in-situ flow metrics information includes indication information, the indication information is used to instruct an end node in the detection domain not to forward the first detection packet to another node, the first analog service packet is not a real service packet sent by user equipment, and the first forwarding path is used to simulate a forwarding path, in the detection domain, of a first real service packet sent by the user equipment.

S502: The second network node performs in-situ flow metrics on network performance based on the first in-situ flow metrics information.

For example, the second network node may be the end node in the detection domain, and after the second network node detects the network performance, the method 500 may further include: The second network node does not forward the first detection packet to another node according to the indication information.

The second network node may be the end node in FIG. 2 or FIG. 3 or the end node 13 in FIG. 7A, FIG. 7B, and FIG. 7C. For a specific operation performed by the second network node, refer to operations performed by the end node in the method 100 and the method 200, or refer to a corresponding operation performed by the end node 13 in FIG. 7A, FIG. 7B, and FIG. 7C. The first detection packet may be the detection packet 1" in the method 100 and the method 200. In this case, the first analog service packet may be the analog service packet 1" in the method 100 and the method 200, the first packet header may be the packet header 1" in the method 100 and the method 200, the indication information may be the indication information 1 in the method 100 and the method 200, and the first forwarding path may be the forwarding path 1 in the method 100 and the method 200. Alternatively, the first detection packet may be the detection packet 2" in the method 200. In this case, the first analog service packet may be the analog service packet 2" in the method 200, the first packet header may be the packet header 2" in the method 200, the indication information may be the indication information 2 in the method 200, and the first forwarding path may be the forwarding path 2 in the method 200. Alternatively, the first detection packet may be the detection packet a'" in the method shown in FIG. 7A, FIG. 7B, and FIG. 7C. In this case, the first analog service packet may be the analog service packet a'" in the method shown in FIG. 7A, FIG. 7B, and FIG. 7C, the first packet header may be the packet header a'" in the method shown in FIG. 7A, FIG. 7B, and FIG. 7C, the indication information may be the indication information a in the method shown in FIG. 7A, FIG. 7B, and FIG. 7C, and the first forwarding path may be the forwarding path X in the method shown in FIG. 7A, FIG. 7B, and FIG. 7C.

For another example, the second network node may be an intermediate node in the detection domain, and the method 500 may further include: The second network node updates the first detection packet to obtain a second detection packet. The second detection packet includes second in-situ flow metrics information, and the second in-situ flow metrics information includes the indication information. The second network node forwards the second detection packet to the end node along the first forwarding path.

The second network node may be the intermediate node 1 or the intermediate node 2 in FIG. 2, any one of the intermediate node 1 to the intermediate node 4 in FIG. 3, or the intermediate node 11 or the intermediate node 12 in FIG. 7A, FIG. 7B, and FIG. 7C. For a specific operation performed by the second network node, refer to operations performed by corresponding intermediate nodes in the method 100, the method 200, and FIG. 7A, FIG. 7B, and FIG. 7C. The second detection packet may be, for example, the detection packet 1' or the detection packet 1" in the method 100 and the method 200 or the detection packet 2' or the detection packet 2" in the method 200. In this case, the second in-situ flow metrics information may be the corresponding in-situ flow metrics information 1', in-situ flow metrics information 1", in-situ flow metrics information 2', in-situ flow metrics information 2", or the indication information 1 or the indication information 2 corresponding to the indication information, and the first forwarding path may be the corresponding forwarding path 1 or forwarding path 2. Alternatively, the second detection packet may be the detection packet a', the detection packet a", or the detection packet a'" in the method shown in FIG. 7A, FIG. 7B, and FIG. 7C. In this case, the second in-situ flow metrics information may be the corresponding in-situ flow metrics information a', in-situ flow metrics information a", in-situ flow metrics information a‴, or the indication information a corresponding to the indication information, and the first forwarding path may be the corresponding forwarding path X.

In a possible implementation, the first analog service packet may be a layer-2 packet, the layer-2 packet includes a virtual local area network VLAN identifier, and the VLAN identifier is used to identify a VLAN to which the user equipment belongs. In this case, the first network node receives, from a first port, the first real service packet sent by the user equipment. The first real service packet carries a VLAN identifier.

In another possible implementation, the first analog service packet is a layer-3 packet, the layer-3 packet includes a source Internet protocol IP address and a destination IP address, the source IP address is an IP address that belongs to a same network segment as an IP address of an ingress interface used by the head node in the detection domain to receive the first real service packet sent by the user equipment, and the destination IP address is an IP address that belongs to a same network segment as an IP address of an egress interface used by the end node to forward the first real service packet to a user side.

It can be learned that in scenarios of both the layer-2 packet and the layer-3 packet, in this embodiment of this application, the analog service packet can be transmitted in the detection domain along a same forwarding path as the real service packet, so that a measurement result of network performance measurement is of real reference significance to forwarding of the real service packet in the detection domain.

The in-situ flow metrics are IFIT in-situ flow metrics, IOAM in-situ flow metrics, or INT in-situ flow metrics.

The in-situ flow metrics are edge-to-edge active in-situ flow metrics or hop-by-hop active in-situ flow metrics.

It should be noted that for a specific implementation and an achieved effect of the method 500 in this embodiment of this application, refer to related descriptions in the foregoing embodiments shown in FIG. 4A and FIG. 4B, FIG. 6A and FIG. 6B, FIG. 7A, FIG. 7B, and FIG. 7C, and FIG. 8.

In addition, an embodiment of this application further provides a first network device 1000, as shown in FIG. 10. The first network device 1000 includes a processing unit 1001 and a sending unit 1002. The processing unit 1001 is configured to perform processing operations performed by the head node in the embodiments shown in FIG. 4A and FIG. 4B and FIG. 6A and FIG. 6B, a processing operation performed by the head node 10 in the embodiment shown in FIG. 7A, FIG. 7B, and FIG. 7C, and a processing operation performed by the first network node in the embodiment shown in FIG. 8. The sending unit 1002 is configured to perform sending operations performed by the head node in the embodiments shown in FIG. 4A and FIG. 4B and FIG. 6A and FIG. 6B, a sending operation performed by the head node 10 in the embodiment shown in FIG. 7A, FIG. 7B, and FIG. 7C, and a sending operation performed by the first network node in the embodiment shown in FIG. 8. For example, the processing unit 1001 may perform an operation in the embodiment in FIG. 4A and FIG. 4B: Ahead node in a detection domain generates a detection packet 1.

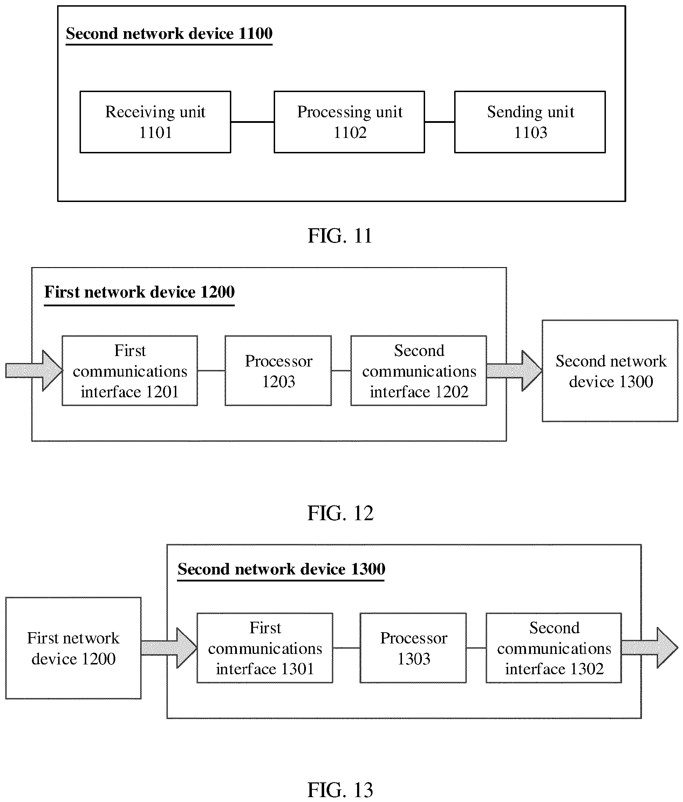

In addition, an embodiment of this application further provides a second network device 1100, as shown in FIG. 11. The second network device 1100 includes a receiving unit 1101, a processing unit 1102, and a sending unit 1103. The receiving unit 1101 is configured to perform receiving operations performed by the intermediate node 1, the intermediate node 2, or the end node in the embodiments shown in FIG. 4A and FIG. 4B and FIG. 6A and FIG. 6B, a receiving operation performed by the intermediate node 11, the intermediate node 12, or the end node 13 in the embodiment shown in FIG. 7A, FIG. 7B, and FIG. 7C, and a receiving operation performed by the second network node in the embodiment shown in FIG. 9. The sending unit 1103 is configured to perform sending operations performed by the intermediate node 1 or the intermediate node 2 in the embodiments shown in FIG. 4A and FIG. 4B and FIG. 6A and FIG. 6B, a sending operation performed by the intermediate node 11, the intermediate node 12, or the end node 13 in the embodiment shown in FIG. 7A, FIG. 7B, and FIG. 7C, and a sending operation performed by the second network node (when the second network node is an intermediate node) in the embodiment shown in FIG. 9. The processing unit 1102 is configured to perform processing operations performed by the intermediate node 1, the intermediate node 2, or the end node in the embodiments shown in FIG. 4A and FIG. 4B and FIG. 6A and FIG. 6B, a processing operation performed by the intermediate node 11, the intermediate node 12, or the end node 13 in the embodiment shown in FIG. 7A, FIG. 7B, and FIG. 7C, and a processing operation performed by the second network node in the embodiment shown in FIG. 9. For example, the receiving unit 1101 may perform an operation in the embodiment in FIG. 4A and FIG. 4B: An intermediate node 2 receives a detection packet 1' sent by an intermediate node 1. The processing unit 1102 may perform operations in the embodiment in FIG. 4A and FIG. 4B: The intermediate node 2 performs in-situ flow metrics on network performance based on in-situ flow metrics information 1' in the detection packet 1', and the intermediate node 2 updates the detection packet 1' to obtain a detection packet 1", where the detection packet 1" includes in-situ flow metrics information 1". The sending unit 1103 may perform an operation in the embodiment in FIG. 4A and FIG. 4B: The intermediate node 2 sends the detection packet 1" to an end node in a detection domain along a forwarding path 1.

In addition, an embodiment of this application further provides a first network device 1200, as shown in FIG. 12. The first network device 1200 includes a first communications interface 1201, a second communications interface 1202, and a processor 1203. The first communications interface 1201 is configured to perform receiving operations performed by the head node in the embodiments shown in FIG. 4A and FIG. 4B and FIG. 6A and FIG. 6B, the head node 10 in the embodiment shown in FIG. 7A, FIG. 7B, and FIG. 7C, and the first network node in the embodiment shown in FIG. 8. The second communications interface 1202 is configured to perform sending operations performed by the head node in the embodiments shown in FIG. 4A and FIG. 4B and FIG. 6A and FIG. 6B, the head node 10 in the embodiment shown in FIG. 7A, FIG. 7B, and FIG. 7C, and the first network node in the embodiment shown in FIG. 8. The processor 1203 is configured to perform operations, other than a receiving operation and a sending operation, performed by the head node in the embodiments shown in FIG. 4A and FIG. 4B and FIG. 6A and FIG. 6B, the head node 10 in the embodiment shown in FIG. 7A, FIG. 7B, and FIG. 7C, and the first network node in the embodiment shown in FIG. 8. For example, the processor 1202 may perform an operation in the embodiment in FIG. 4A and FIG. 4B: Ahead node in a detection domain generates a detection packet 1.

In addition, an embodiment of this application further provides a second network device 1300, as shown in FIG. 13. The second network device 1300 includes a first communications interface 1301, a second communications interface 1302, and a processor 1303. The first communications interface 1301 is configured to perform receiving operations performed by the intermediate node 1 and the intermediate node 2 in the embodiments shown in FIG. 4A and FIG. 4B and FIG. 6A and FIG. 6B, receiving operations performed by the intermediate node 11 and the intermediate node 12 in the embodiment shown in FIG. 7A, FIG. 7B, and FIG. 7C, and a receiving operation performed by the second network node (when the second network node is an intermediate node) in the embodiment shown in FIG. 8. The second communications interface 1302 is configured to perform sending operations performed by the intermediate node 1 and the intermediate node 2 in the embodiments shown in FIG. 4A and FIG. 4B and FIG. 6A and FIG. 6B, sending operations performed by the intermediate node 11 and the intermediate node 12 in the embodiment shown in FIG. 7A, FIG. 7B, and FIG. 7C, and a sending operation performed by the second network node (when the second network node is an intermediate node) in the embodiment shown in FIG. 8. Alternatively, the first communications interface 1301 is configured to perform receiving operations performed by the end node in the embodiments shown in FIG. 4A and FIG. 4B and FIG. 6A and FIG. 6B, a receiving operation performed by the end node 13 in the embodiment shown in FIG. 7A, FIG. 7B, and FIG. 7C, and a receiving operation performed by the second network node (when the second network node is an end node) in the embodiment shown in FIG. 8. The second communications interface 1302 is configured to perform sending operations performed by the end node in the embodiments shown in FIG. 4A and FIG. 4B and FIG. 6A and FIG. 6B, a sending operation performed by the end node 13 in the embodiment shown in FIG. 7A, FIG. 7B, and FIG. 7C, and a sending operation performed by the second network node (when the second network node is the end node) in the embodiment shown in FIG. 8. The processor 1302 is configured to perform operations, other than a receiving operation and a sending operation, performed by the intermediate node 1, the intermediate node 2, or the end node in the embodiments shown in FIG. 4A and FIG. 4B and FIG. 6A and FIG. 6B, an operation, other than a receiving operation and a sending operation, performed by the intermediate node 11, the intermediate node 12, or the end node 13 in the embodiment shown in FIG. 7A, FIG. 7B, and FIG. 7C, and an operation, other than a receiving operation and a sending operation, performed by the second network node in the embodiment shown in FIG. 8. For example, the processor 1302 may perform an operation in the embodiment in FIG. 4A and FIG. 4B: An intermediate node 2 performs in-situ flow metrics on network performance based on in-situ flow metrics information 1' in a detection packet 1', and the intermediate node 2 updates the detection packet 1' to obtain a detection packet 1", where the detection packet 1" includes in-situ flow metrics information 1".

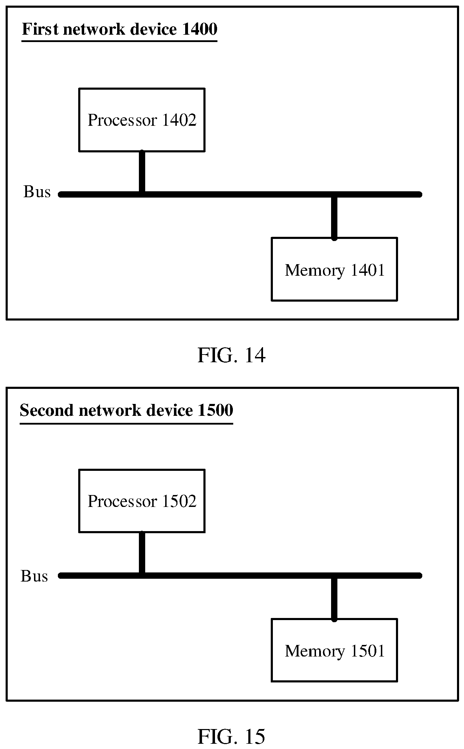

In addition, an embodiment of this application further provides a first network device 1400, as shown in FIG. 14. The first network device 1400 includes a memory 1401 and a processor 1402 communicating with the memory 1401. The memory 1401 includes computer-readable instructions. The processor 1402 is configured to execute the computer-readable instructions, so that the first network device 1400 performs the methods on a side of the head node in the embodiments shown in FIG. 4A and FIG. 4B and FIG. 6A and FIG. 6B, the method on a side of the head node 10 in the embodiment shown in FIG. 7A, FIG. 7B, and FIG. 7C, and the method on a side of the first network node in the embodiment shown in FIG. 8.

In addition, an embodiment of this application further provides a second network device 1500, as shown in FIG. 15. The second network device 1500 includes a memory 1501 and a processor 1502 communicating with the memory 1501. The memory 1501 includes computer-readable instructions. The processor 1502 is configured to execute the computer-readable instructions, so that the second network device 1500 performs the methods on a side of the intermediate node 1, the intermediate node 2, or the end node in the embodiments shown in FIG. 4A and FIG. 4B and FIG. 6A and FIG. 6B, the method on a side of the intermediate node 11, the intermediate node 12, or the end node 13 in the embodiment shown in FIG. 7A, FIG. 7B, and FIG. 7C, and the method on a side of the second network node in the embodiment shown in FIG. 9.

It may be understood that, in the foregoing embodiment, the processor may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof. The processor may be one processor, or may include a plurality of processors. The memory may be a volatile memory (English: volatile memory) such as a random-access memory (English: random-access memory, RAM for short). The memory may further include a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short). The memory may further include a combination of the foregoing types of memories. The memory may be one memory, or may include a plurality of memories. In a specific implementation, the memory stores computer-readable instructions, and the computer-readable instructions include a plurality of software modules, for example, a sending module, a processing module, and a receiving module. After executing each software module, the processor may perform a corresponding operation based on an indication of each software module. In this embodiment, an operation performed by a software module is actually an operation performed by the processor based on an indication of the software module. After executing the computer-readable instructions in the memory, the processor may perform, based on an indication of the computer-readable instructions, all operations that can be performed by network nodes performing active in-situ flow metrics.

It may be understood that in the foregoing embodiments, the second communications interface 1202 of the first network device 1200 may be specifically used as the sending unit 1002 of the first network device 1000, to implement data communication between the first network device and a second network device. The first communications interface 1201 of the first network device 1200 may be specifically used as a receiving unit of the first network device 1000, for example, may be configured to receive a first real service packet sent by user equipment. Similarly, the first communications interface 1301 of the second network device 1300 may be specifically used as the receiving unit 1101 of the second network device 1100, to implement data communication between adjacent second network devices or between a first network device and the second network device. The second communications interface 1302 of the second network device 1300 may be specifically used as the sending unit 1103 of the second network device 1100, to implement data communication between adjacent second network devices or between the second network device and a network device outside a detection domain.

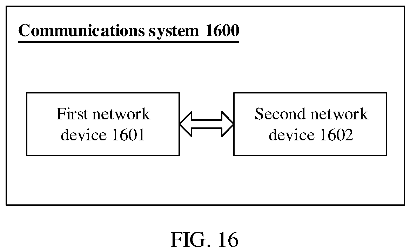

In addition, an embodiment of this application further provides a communications system 1600, as shown in FIG. 16. The communications system 1600 includes a first network device 1601 and a second network device 1602. The first network device 1601 may be specifically the first network device 1000, the first network device 1200, or the first network device 1400, and the second network device 1602 may be specifically the second network device 1100, the second network device 1300, or the second network device 1500.

In addition, an embodiment of this application further provides a computer-readable storage medium. The computer-readable storage medium stores instructions, and when the instructions run on a computer, the computer performs the active in-situ flow metrics method in the embodiments shown in FIG. 4A and FIG. 4B and FIG. 6A and FIG. 6B to FIG. 9.

In addition, an embodiment of this application further provides a computer program product, including a computer program or computer-readable instructions. When the computer program or the computer-readable instructions run on a computer, the computer performs the active in-situ flow metrics method in the embodiments shown in FIG. 4A and FIG. 4B and FIG. 6A and FIG. 6B to FIG. 9.

It should be noted that in embodiments of this application, "head node" and "end node" are used for a detection domain of in-situ flow metrics, and "source MAC address", "destination MAC address", "source IP address", and "destination IP address" are concepts used for a source network node and a destination network node when a service packet is transmitted in an entire network, and the two are different in scope.

It can be learned from the foregoing descriptions of the implementations that, a person skilled in the art may clearly understand that a part or all of the steps of the methods in the foregoing embodiments may be implemented by using software and a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or an optical disc, and include several instructions for instructing a computer device (which may be a personal computer, a server, or a network communications device such as a router) to perform the methods described in embodiments or some parts of embodiments of this application.

Embodiments in this specification are all described in a progressive manner, for same or similar parts in embodiments, refer to these embodiments. Each embodiment focuses on a difference from other embodiments. Especially, system and device embodiments are basically similar to a method embodiment, and therefore are described briefly. For related parts, refer to partial descriptions in the method embodiment. The described device and system embodiments are merely examples. The modules described as separate parts may or may not be physically separate, and parts displayed as modules may or may not be physical modules, may be located in one position, or may be distributed on a plurality of network units. Some or all of the modules may be selected based on an actual requirement to achieve the objectives of the solutions of embodiments. A person of ordinary skill in the art may understand and implement embodiments of this application without creative efforts.

The foregoing descriptions are merely preferred implementations of this application, and not intended to limit the protection scope of this application. It should be noted that a person of ordinary skill in the art may make improvements and polishing without departing from this application and the improvements and polishing shall fall within the protection scope of this application.

## Claims

1. An active in-situ flow metrics method, comprising:
generating, by a first network node, a first analog service packet, wherein the first analog service packet is not a real service packet sent by user equipment;
generating, by the first network node, a first detection packet, wherein the first network node is a head node in a detection domain; and the first detection packet comprises a first packet header and the first analog service packet, a first forwarding path of the first detection packet in the detection domain is a forwarding path, in the detection domain, of a first real service packet sent by the user equipment, the first packet header comprises first in-situ flow metrics information, the first in-situ flow metrics information is used by a node in the first forwarding path to perform in-situ flow metrics on network performance, the first in-situ flow metrics information comprises first indication information, and the first indication information is used to instruct an end node in the detection domain not to forward the first detection packet to another node; and
sending, by the first network node, the first detection packet to the end node in the detection domain along the first forwarding path.

2. The method according to claim 1, wherein the first packet header comprises a first in-situ flow metrics header, and the first in-situ flow metrics header comprises the first indication information.

3. The method according to claim 2, wherein the first indication information is information indicated by at least one bit comprised in the first in-situ flow metrics header.

4. The method according to claim 1, wherein the first packet header comprises a first extended in-situ flow metrics header, the first extended in-situ flow metrics header is used to carry the first indication information, and a type field of the first extended in-situ flow metrics header indicates that the in-situ flow metrics are active in-situ flow metrics.

5. The method according to claim 1, wherein the first packet header comprises an OPTION field, and the OPTION field comprises the first indication information.

6. The method according to claim 5, wherein the first indication information is information indicated by at least one bit comprised in the OPTION field.

7. The method according to claim 5 or 6, wherein the first indication information is information indicated by a type field of the OPTION field, and the type field indicates that the in-situ flow metrics are active in-situ flow metrics.

8. The method according to any one of claims 1 to 7, wherein the in-situ flow metrics are in-situ flow information telemetry IFIT in-situ flow metrics, in-situ operations administration and maintenance IOAM in-situ flow metrics, or in-band network telemetry INT in-situ flow metrics.

9. The method according to any one of claims 1 to 8, wherein the in-situ flow metrics are edge-to-edge active in-situ flow metrics or hop-by-hop active in-situ flow metrics.

10. The method according to any one of claims 1 to 9, wherein the first analog service packet is a layer-2 packet, the layer-2 packet comprises a virtual local area network VLAN identifier, and the VLAN identifier is used to identify a VLAN to which the first real service packet belongs.

11. The method according to claim 10, wherein the method further comprises:
receiving, by the first network node, the first real service packet sent by the user equipment, wherein the first real service packet carries the VLAN identifier; and
forwarding, by the first network node, the first real service packet to the end node along the first forwarding path.

12. The method according to any one of claims 1 to 9, wherein the first analog service packet is a layer-3 packet, the layer-3 packet comprises a source Internet protocol IP address and a destination IP address, the source IP address is an IP address that belongs to a same network segment as an IP address of an ingress interface used by the first network node to receive the first real service packet, and the destination IP address is an IP address that belongs to a same network segment as an IP address of an egress interface used by the end node to forward the first real service packet to a user side.

13. The method according to any one of claims 1 to 12, wherein the method further comprises:
generating, by the first network node, a second analog service packet, wherein the second analog service packet is not a real service packet sent by the user equipment;
generating, by the first network node, a second detection packet, wherein the first detection packet and the second detection packet have different protocol numbers and/or transmission control protocol TCP/user datagram protocol UDP port numbers, the second detection packet comprises a second packet header and the second analog service packet, a second forwarding path of the second detection packet in the detection domain is a forwarding path, in the detection domain, of a second real service packet sent by the user equipment, the second packet header comprises second in-situ flow metrics information, the second in-situ flow metrics information is used by a node in the second forwarding path to perform in-situ flow metrics on network performance, the second in-situ flow metrics information comprises second indication information, and the second indication information is used to indicate the end node not to forward the second detection packet to another node; and
sending, by the first network node, the second detection packet to the end node along the second forwarding path.

14. A method for actively detecting network performance based on in-situ flow metrics, comprising:
receiving, by a second network node in a detection domain by using a first forwarding path in the detection domain, a first detection packet sent by a first network node in the detection domain, wherein the first detection packet comprises a first packet header and a first analog service packet, the first packet header comprises first in-situ flow metrics information, the first in-situ flow metrics information comprises indication information, the indication information is used to instruct an end node in the detection domain not to forward the first detection packet to another node, the first analog service packet is not a real service packet sent by user equipment, and the first forwarding path is a forwarding path, in the detection domain, of a first real service packet sent by the user equipment; and
performing, by the second network node, in-situ flow metrics on the network performance based on the first in-situ flow metrics information.

15. The method according to claim 14, wherein the second network node is the end node in the detection domain, and after the detecting, by the second network node, the network performance, the method further comprises:
skipping forwarding, by the second network node, the first detection packet to another node according to the indication information.

16. The method according to claim 14, wherein the second network node is an intermediate node in the detection domain, and the method further comprises:
updating, by the second network node, the first detection packet to obtain a second detection packet, wherein the second detection packet comprises second in-situ flow metrics information, and the second in-situ flow metrics information comprises the indication information; and
forwarding, by the second network node, the second detection packet to the end node along the first forwarding path.

17. The method according to any one of claims 14 to 16, wherein the first analog service packet is a layer-2 packet, the layer-2 packet comprises a virtual local area network VLAN identifier, and the VLAN identifier is used to identify a VLAN to which the first real service packet belongs.

18. The method according to claim 17, wherein the second network node receives the first real service packet sent by the user equipment, and the first real service packet carries the VLAN identifier.

19. The method according to any one of claims 14 to 16, wherein the first analog service packet is a layer-3 packet, the layer-3 packet comprises a source Internet protocol IP address and a destination IP address, the source IP address is an IP address that belongs to a same network segment as an IP address of an ingress interface used by a head node in the detection domain to receive the first real service packet sent by the user equipment, and the destination IP address is an IP address that belongs to a same network segment as an IP address of an egress interface used by the end node to forward the first real service packet to a user side.

20. The method according to any one of claims 14 to 19, wherein the in-situ flow metrics are in-situ flow information telemetry IFIT, in-situ operations administration and maintenance IOAM in-situ flow metrics, or in-band network telemetry INT in-situ flow metrics.

21. The method according to any one of claims 14 to 20, wherein the in-situ flow metrics are edge-to-edge active in-situ flow metrics or hop-by-hop active in-situ flow metrics.

22. A network device, comprising:
a memory, wherein the memory comprises computer-readable instructions; and
a processor communicating with the memory, wherein the processor is configured to execute the computer-readable instructions, so that the network device is configured to perform the method according to any one of claims 1 to 13.

23. A network device, comprising:
a memory, wherein the memory comprises computer-readable instructions; and
a processor communicating with the memory, wherein the processor is configured to execute the computer-readable instructions, so that the network device is configured to perform the method according to any one of claims 14 to 21.

24. A computer-readable storage medium, comprising computer-readable instructions, wherein when the computer-readable instructions run on a computer, the computer implements the method according to any one of claims 1 to 21.

25. A computer program product, comprising a computer program or computer-readable instructions, wherein when the computer program or the computer-readable instructions run on a computer, the method according to any one of claims 1 to 21 is implemented.

26. A communications system, comprising the network device according to claim 22 and the network device according to claim 23.
